# EUROPEAN PATENT APPLICATION

(11) **EP 3 203 422 A1**
(43) Date of publication of application: **09.08.2017**
(21) Application number: 17152117.2
(22) Date of filing: 19.01.2017
(51) Int. Cl.: G06Q 10/06

(54) **INTELLIGENT SCHEDULING AND WORK ITEM ALLOCATION**

(30) Priority: 21.01.2016 US 201615003411
(71) Applicant: Accenture Global Solutions Limited, Dublin 4 (IE)
(72) Inventor: DUBASH, Neville, 400093 Mumbai, Maharashtra (IN); INGRAM, David Edward, Beckenham, BR3 1QG (GB); PODDER, Sanjay, 400607 Thane (IN)
(74) Representative: Müller-Boré & Partner Patentanwälte PartG mbB

(57) **Abstract**

According to examples, intelligent scheduling and work item allocation may include ascertaining work items, and classifying the work items by using classification rules to map each of the work items to a corresponding type of work item based on attributes associated with the work items to generate classified work items. Intelligent scheduling and work item allocation may include prioritizing the classified work items by using prioritization rules to determine a sequence of the classified work items based on the attributes and classification of the work items to generate prioritized work items. Intelligent scheduling and work item allocation may include scheduling the classified and prioritized work items by using scheduling rules to determine times of processing of the classified and prioritized work items, and allocating the classified and prioritized work items by using allocation rules to determine resources that are to process the classified and prioritized work items.

## Description

### BACKGROUND

Work item prioritization and allocation may be performed by personnel such as team leads and/or supervisors who may plan out the work for a day, and allocate lists of work items to resources using tools such as a "whiteboard", MS Excel, etc. For example, a resource may include a team of agents (e.g., team members who perform, for example, by processing, a work item or work items) that may have a meeting where the work and priorities for the day are discussed and agreed upon. Agents of the team may proceed to process their allocated work items, often selecting preferred work items from their list. Allocated lists of work items may be updated intra-day, and the team leads and/or supervisors may monitor progress accordingly.

### BRIEF DESCRIPTION OF DRAWINGS

Features of the present disclosure are illustrated by way of examples shown in the following figures. In the following figures, like numerals indicate like elements, in which:
Figure 1 illustrates an intelligent scheduling and work item allocation system, according to an example of the present disclosure;
Figure 2 illustrates a flowchart of classification of work items for the intelligent scheduling and work item allocation system of Figure 1, according to an example of the present disclosure;
Figure 3 illustrates a flowchart of prioritization of classified work items for the intelligent scheduling and work item allocation system of Figure 1, according to an example of the present disclosure;
Figure 4 illustrates a flowchart of scheduling of the classified and prioritized work items for the intelligent scheduling and work item allocation system of Figure 1, according to an example of the present disclosure;
Figure 5 illustrates a general user interface display of scheduling rules configuration for the intelligent scheduling and work item allocation system of Figure 1, according to an example of the present disclosure;
Figure 6 illustrates a rules user interface display of scheduling rules configuration for the intelligent scheduling and work item allocation system of Figure 1, according to an example of the present disclosure;
Figure 7 illustrates a processing groups user interface display of scheduling rules configuration for the intelligent scheduling and work item allocation system of Figure 1, according to an example of the present disclosure;
Figure 8 illustrates a calculated/derived fields user interface display of scheduling rules configuration for the intelligent scheduling and work item allocation system of Figure 1, according to an example of the present disclosure;
Figure 9 illustrates work items to be scheduled for the intelligent scheduling and work item allocation system of Figure 1, according to an example of the present disclosure;
Figure 10 illustrates work items classification for the intelligent scheduling and work item allocation system of Figure 1, according to an example of the present disclosure;
Figure 11 illustrates work items prioritization for the intelligent scheduling and work item allocation system of Figure 1, according to an example of the present disclosure;
Figure 12 illustrates scheduling of work items for the intelligent scheduling and work item allocation system of Figure 1, according to an example of the present disclosure;
Figure 13 illustrates resources and capabilities determination for the intelligent scheduling and work item allocation system of Figure 1, according to an example of the present disclosure;
Figure 14 illustrates precedence determination for the intelligent scheduling and work item allocation system of Figure 1, according to an example of the present disclosure;
Figure 15 illustrates precedence determination for the intelligent scheduling and work item allocation system of Figure 1, according to an example of the present disclosure;
Figure 16 illustrates allocation of work items for the intelligent scheduling and work item allocation system of Figure 1, according to an example of the present disclosure;
Figure 17 illustrates distribution of work items for the intelligent scheduling and work item allocation system of Figure 1, according to an example of the present disclosure;
Figure 18 illustrates allocation of work items for the intelligent scheduling and work item allocation system of Figure 1, according to an example of the present disclosure;
Figure 19 illustrates allocation of work items for the intelligent scheduling and work item allocation system of Figure 1, according to an example of the present disclosure;
Figure 20 illustrates incorrect allocation of work items for the intelligent scheduling and work item allocation system of Figure 1, according to an example of the present disclosure;
Figure 21 illustrates allocation of work items for the intelligent scheduling and work item allocation system of Figure 1, according to an example of the present disclosure;
Figure 22 illustrates a calendar for scheduling of work items for the intelligent scheduling and work item allocation system of Figure 1, according to an example of the present disclosure;
Figure 23 illustrates scheduling of work items for the intelligent scheduling and work item allocation system of Figure 1, according to an example of the present disclosure;
Figure 24 illustrates a flowchart of a method for intelligent scheduling and work item allocation, according to an example of the present disclosure;
Figure 25 illustrates another flowchart of a method for intelligent scheduling and work item allocation, according to an example of the present disclosure; and
Figure 26 illustrates a computer system, according to an example of the present disclosure.

### DETAILED DESCRIPTION

For simplicity and illustrative purposes, the present disclosure is described by referring mainly to examples thereof. In the following description, numerous specific details are set forth in order to provide a thorough understanding of the present disclosure. It will be readily apparent however, that the present disclosure may be practiced without limitation to these specific details. In other instances, some methods and structures have not been described in detail so as not to unnecessarily obscure the present disclosure.

Throughout the present disclosure, the terms "a" and "an" are intended to denote at least one of a particular element. As used herein, the term "includes" means includes but not limited to, the term "including" means including but not limited to. The term "based on" means based at least in part on.

With respect to work item prioritization and allocation, once a list of work items is allocated to resources such as a team of agents (e.g., team members who perform, for example, by processing, a work item or work items), the agents of the team may proceed to process their allocated work items, often selecting preferred work items from their list. This type of allocation and selection of work items may lead to inefficient and inadequate use of the resources for processing of work items.

In order to address the aforementioned technical challenges with respect to scheduling and allocation of work items, an intelligent scheduling and work item allocation system and a method for intelligent scheduling and work item allocation are disclosed herein. For the system and method disclosed herein, work items may be imported, and automatically (e.g., without human intervention) classified and prioritized based upon defined rules. That is, the system and method disclosed herein may use rules (e.g., scheduling rules) to schedule work items (e.g., things that need to be processed), and allocate the work items to the most appropriate resources for processing. In this regard, scheduling may pertain to when a work item should (or can) be processed. Allocation may pertain to whom (e.g., which agent) a work item should be assigned to.

For the system and method disclosed herein, a team lead and/or supervisor may review the work items, available resources, adjust priorities, etc., at the beginning of a day, and/or intra-day. Agents may start a work item, for example, by selecting a "Getting Next Work Item" option on a user interface, processing (e.g., by performing) the work item, and then obtaining a next work item by again selecting the "Getting Next Work Item" option on the user interface. A dashboard including the status of the work items may be updated intra-day, and the team lead and/or supervisor may monitor progress accordingly.

According to examples, the system and method disclosed herein may be used to schedule and allocate any type of work item.

According to examples, the system and method disclosed herein may provide for improved efficiency and quality by allocating work items to a correct agent at a correct point in time.

According to examples, the system and method disclosed herein may be used in a variety of fields, such as, for example, telecom, for meter billing processing, utilities, for example, for order processing, human resources, for example, for screening and recruitment interviews, and generally, for any field where any type of work item may be classified, prioritized, and/or scheduled.

The intelligent scheduling and work item allocation system and the method for intelligent scheduling and work item allocation disclosed herein provide a technical solution to technical problems related, for example, to work item classification, prioritization, scheduling, and/or allocation. As disclosed herein, the system and method disclosed herein provide the technical solution of a work item classifier that is executed by at least one hardware processor to ascertain work items, where the work items may include attributes, and classify the work items by using classification rules to map each of the work items to a corresponding type of work item from a plurality of types of work items based on the attributes associated with the work items to generate classified work items. A work item prioritizer that is executed by the at least one hardware processor may prioritize the classified work items by using prioritization rules to determine a sequence of the classified work items based on the attributes associated with the work items and classification of the work items to generate prioritized work items. A work item scheduler that is executed by the at least one hardware processor may schedule the classified and prioritized work items by using scheduling rules to determine times of processing of the classified and prioritized work items based on the attributes associated with the work items. A work item allocator that is executed by the at least one hardware processor may allocate the classified and prioritized work items by using allocation rules to determine resources that are to process the classified and prioritized work items. According to examples, the resources may include hardware resources. According to examples, the work item scheduler may schedule the classified and prioritized work items by determining capabilities of the resources that are to process the classified and prioritized work items, determining precedence, based on ranking of the determined capabilities, for the resources that are to process the classified and prioritized work items, and scheduling, based on the determined precedence, the classified and prioritized work items by using scheduling rules to determine the times of processing of the classified and prioritized work items based on the attributes associated with the work items. According to examples, the work item allocator may allocate the classified and prioritized work items by determining capabilities of the resources that are to process the classified and prioritized work items, determining precedence, based on ranking of the determined capabilities, for the resources that are to process the classified and prioritized work items, and allocating, based on the determined precedence, the classified and prioritized work items by using the allocation rules to determine the resources that are to process the classified and prioritized work items. According to examples, the work item scheduler may schedule the classified and prioritized work items by determining capabilities of the resources that are to process the classified and prioritized work items, determining a distribution, based on the determined capabilities of the resources that are to process the classified and prioritized work items and ranking of a number of the work items for different types of the work items, to determine primary and secondary work item types that are to be allocated to the resources that are to process the classified and prioritized work items, and scheduling, based on the determined distribution, the classified and prioritized work items by using scheduling rules to determine the times of processing of the classified and prioritized work items based on the attributes associated with the work items. According to examples, the work item allocator may allocate the classified and prioritized work items by determining capabilities of the resources that are to process the classified and prioritized work items, determining a distribution, based on the determined capabilities of the resources that are to process the classified and prioritized work items and ranking of a number of the work items for different types of the work items, to determine primary and secondary work item types that are to be allocated to the resources that are to process the classified and prioritized work items, and allocating, based on the determined distribution, the classified and prioritized work items by using the allocation rules to determine the resources that are to process the classified and prioritized work items. The system and method disclosed herein may thus provide the technical solution of improved performance and reduced computing resource utilization with respect to components that are used to generate, utilize, schedule, allocate, and perform work items.

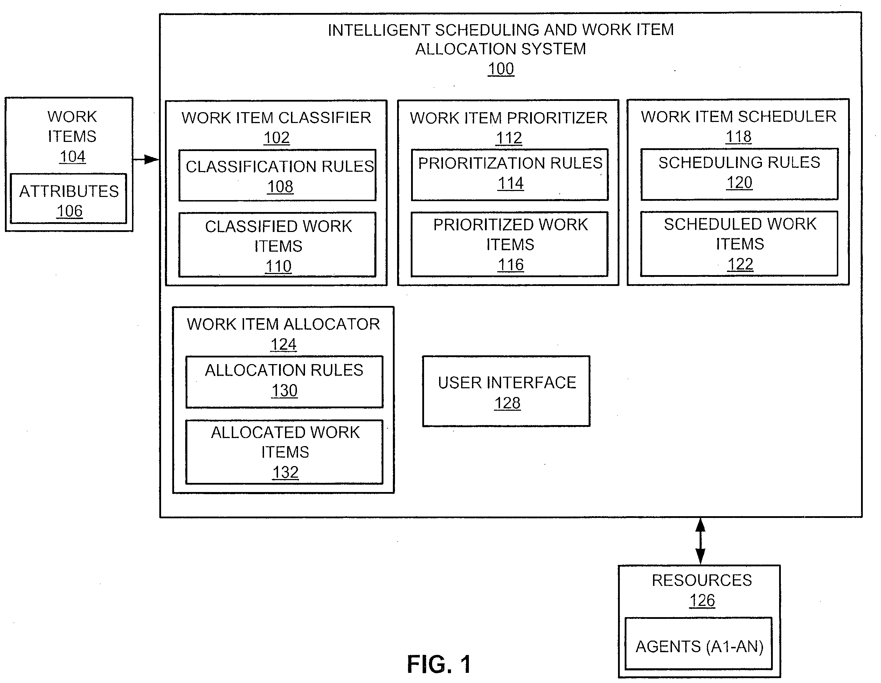

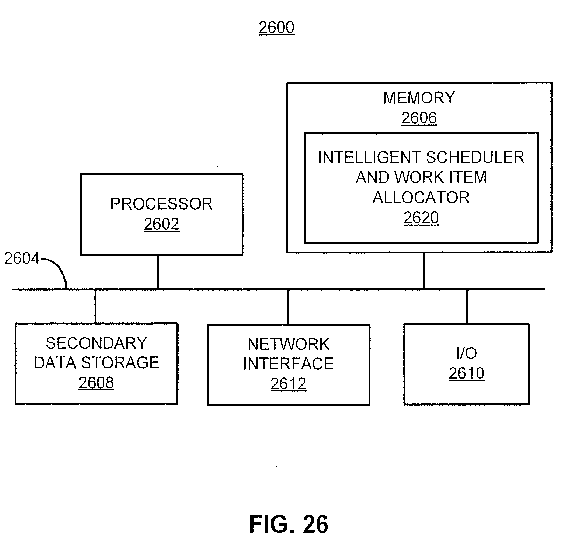

Figure 1 illustrates an intelligent scheduling and work item allocation system 100 (e.g., system 100 as disclosed herein), according to an example of the present disclosure. Referring to Figure 1, the system 100 may include a work item classifier 102 that is executed by a hardware processor (e.g., the hardware processor 2602 of Figure 26) to ascertain (e.g., receive, determine, etc.) work items 104. The work items 104 may include the attributes 106. The work item classifier 102 may classify (e.g., by categorizing) the work items 104 by using classification rules 108 to map the work items to a specific type based on the attributes 106 associated with the work items 104 to generate classified work items 110. The classification rules 108 may be analyze the attributes 106 of the work items 104. For example, as disclosed herein, with respect to invoices, the classification rules 108 may pertain to an evaluation of whether an invoice is a purchase order (PO) invoice or a non-PO invoice, whether an invoice value is low or high, etc.). A work item may be classified into one or more types of work items.

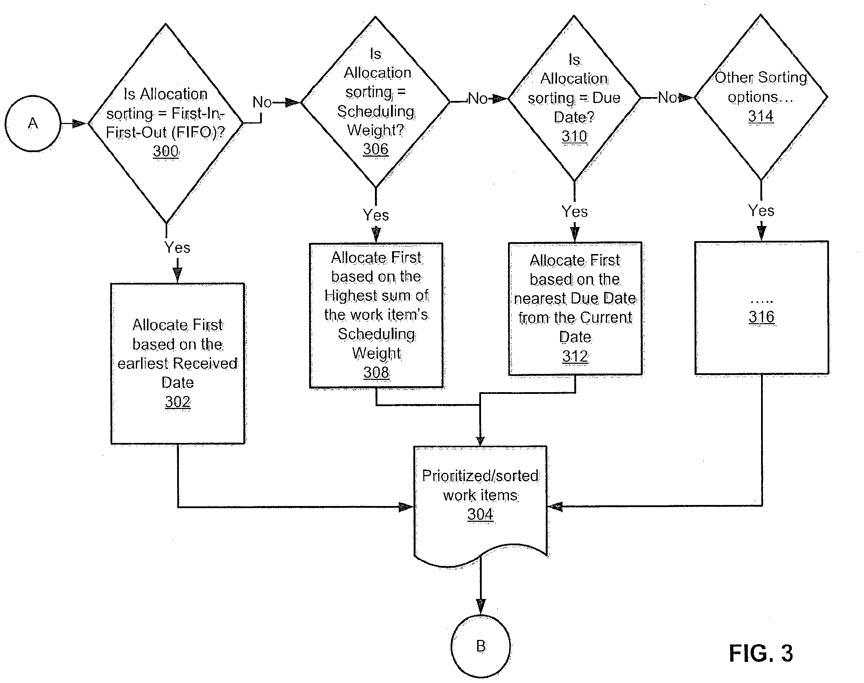

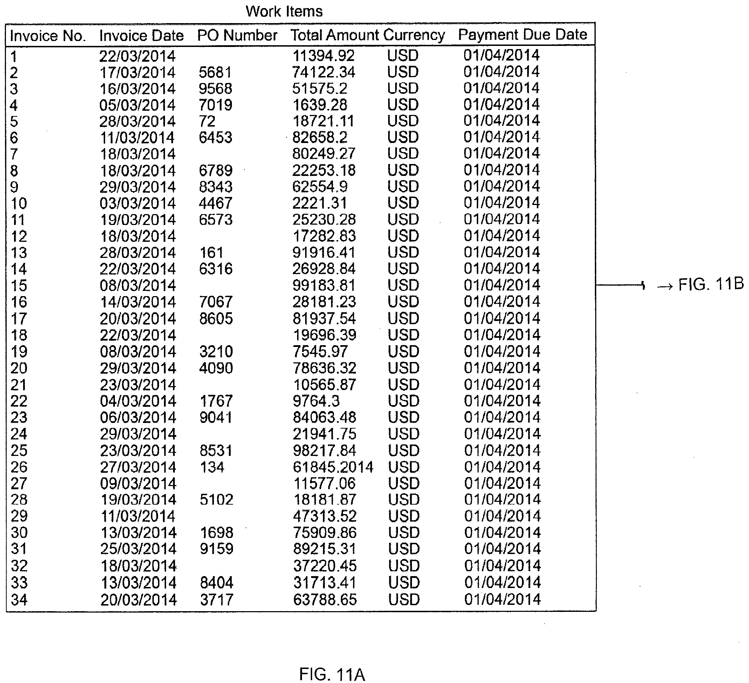

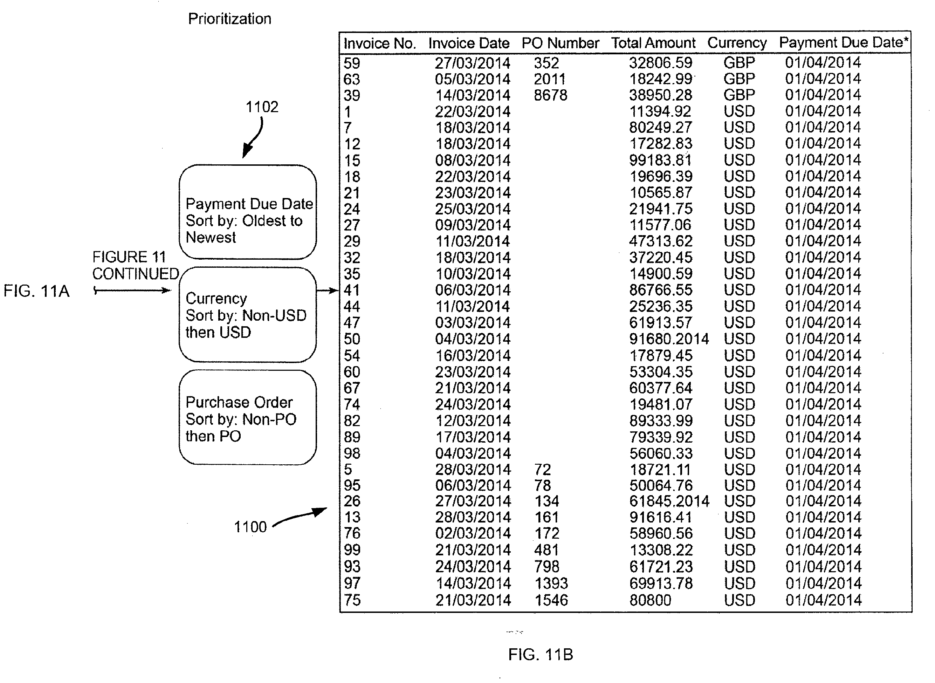

A work item prioritizer 112 that is executed by the hardware processor may prioritize (e.g., by ordering) the classified work items 110 by using prioritization rules 114 that sequence the classified work items 110 based upon the attributes they include and their classifications (e.g., types), as needed, to generate prioritized work items 116. As disclosed herein, the work items 104 may be prioritized (e.g., sorted), for example, based on attributes such as due date etc., as disclosed herein with reference to Figures 3 and 11, and/or other aspects such as scheduling weight, first-in-first-out (FIFO), etc., as disclosed herein with reference to Figure 3.

A work item scheduler 118 that is executed by the hardware processor may schedule the prioritized work items 116 by using scheduling rules 120 that determine the time (e.g., date) that a work item should (or may) be scheduled for processing based upon the attributes of the work items to generate scheduled work items 122. As disclosed herein, the work items 104 may be scheduled based on when the work items are to be processed, and further allocated (i.e., by a work item allocator 124 that is executed by the hardware processor as disclosed herein) to appropriate resources 126 that should process the work items. According to examples, the resources may include hardware resources. Scheduling of work items may be based on the which processing group a work item may fall in. A processing group may include corresponding rules and/or classifications associated therewith. Once a work item has been classified based on its attributes, the work item may identify the processing group (or groups) as well. The classified work items may then be potentially allocated to members of the identified processing group.

With respect to scheduling and allocation, skills and availability of the resources 126 may be considered as disclosed herein. Further, resources belonging to a specific group of skills may be ranked to determine precedence (e.g., based on a first precedence technique used by the work item scheduler 118 and/or the work item allocator 124). If a resource is part of multiple groups of skills, the highest ranking (e.g., lowest number) may be used for the group of skills with less members (e.g., least skilled). Furthermore, ranking may also consider the volume of work items in a given classification. The higher volume of work items across available classifications with less number of capable resources may be assigned the highest ranking (e.g., based on a second, more complex, precedence technique used by the work item scheduler 118 and/or the work item allocator 124, compared to the first precedence technique).

The scheduled work items 122 may be forwarded to the resources 126. According to examples, the resources 126 may include agents to perform, for example, by processing, a work item or work items. For example, the agents may include agents A(1)-A(N) (hereinafter also referred to as agents 1-N).

With respect to allocation of the work items 104 by the work item allocator 124, a resource member (e.g., one of the agents 1-N) may request, via actuation of a "Get Next Work Item" option on a user interface 128, the work item to be processed. In this regard, the work item allocator 124 may apply allocation rules 130 to determine the highest ranking (i.e., lowest number) of the agent of the resources 126 across all classifications, and generate allocated work items 132 based on the priority.

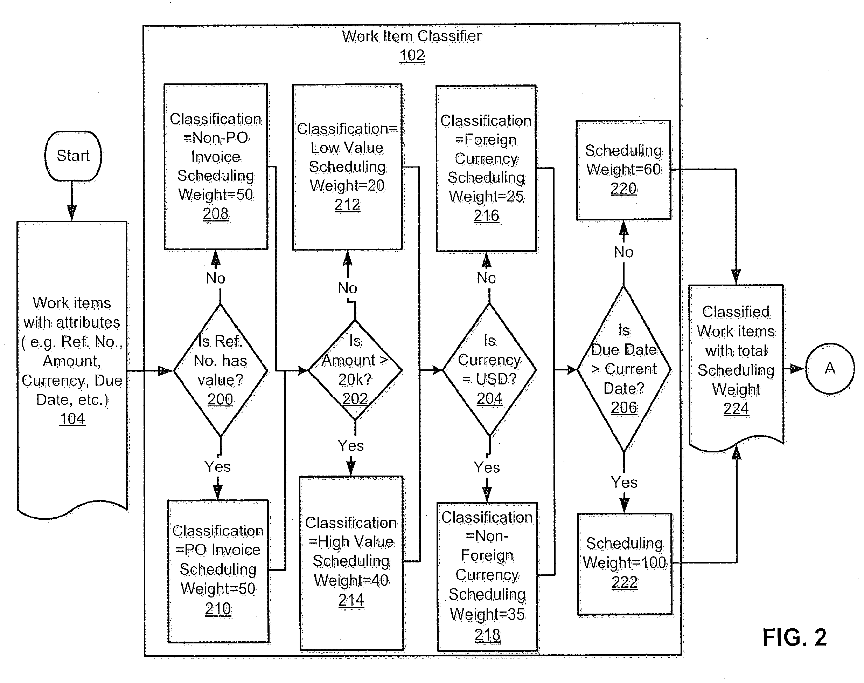

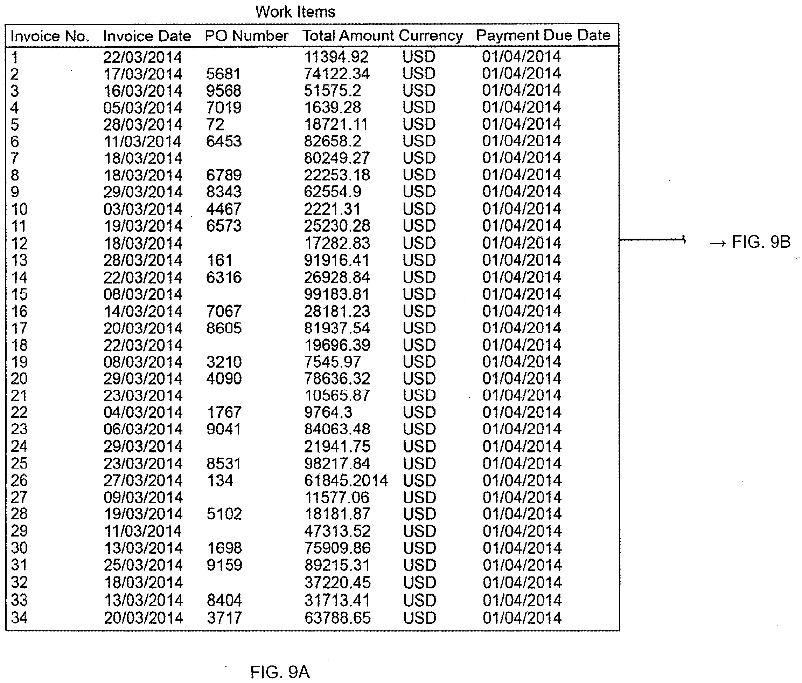

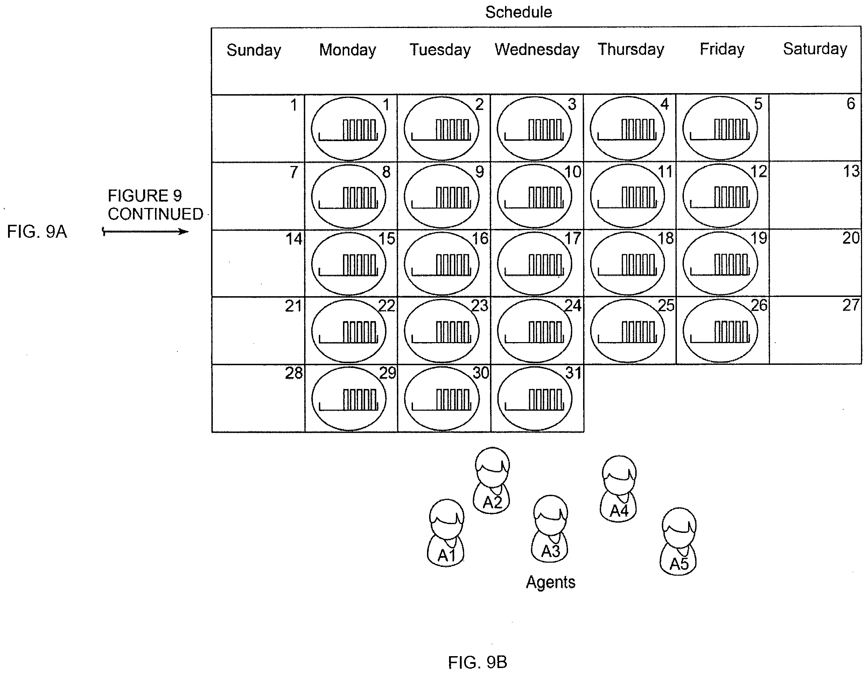

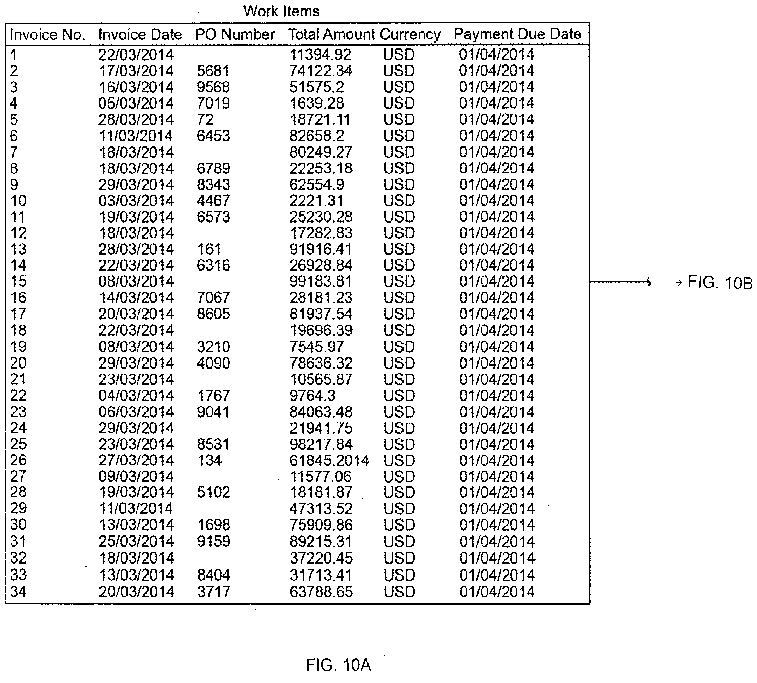

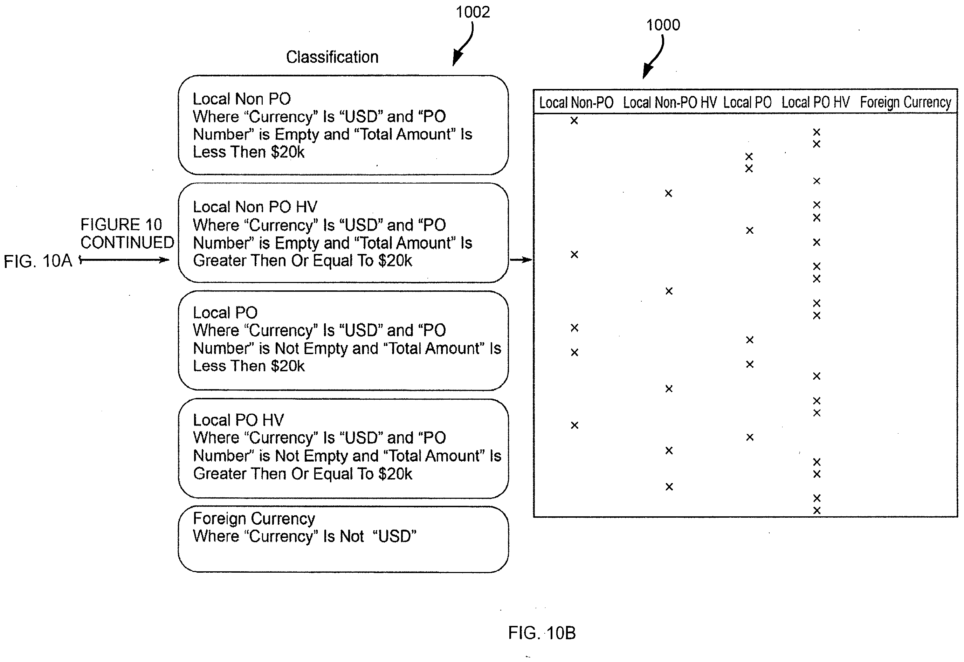

Figure 2 illustrates a flowchart of classification of work items for the system 100, according to an example of the present disclosure. Figure 9 illustrates work items to be scheduled for the system 100, according to an example of the present disclosure. Figure 10 illustrates work items classification for the system 100, according to an example of the present disclosure.

Referring to Figures 1, 2, 9, and 10, the example of Figures 2, 9, and 10 may pertain to a series of invoices that are to be processed on a specific date by specific resources 126 to demonstrate intelligent scheduling and work item allocation for the system 100. The resources 126 may include agents A1, A2, A3, A4, and A5.

Referring to Figures 1 and 2, with respect to classification of the work items 104, the work item classifier 102 may receive the work items 104. The work items 104 may include the attributes 106. For the example of the series of invoices as disclosed herein, the attributes 106 may include invoice reference number, amount, currency, due date, etc. The work item classifier 102 may classify (e.g., categorize) the work items 104 by using the classification rules 108 to map the work items to a specific type based on the attributes 106 associated with the work items 104.

Referring to Figures 1 and 2, for the example of the work items that include invoices, the classification rules 108 may include a determination at block 200 as to whether a reference number for the work item includes a value, a determination at block 202 as to whether an amount associated with the work item is greater than a predetermined value (e.g., 20K), a determination at block 204 as to whether a currency associated with the work item is dollars (or another type of currency), a determination at block 206 as to whether a due date associated with the work item is greater than a predetermined due date (e.g., current date), etc. Based on the determination at blocks 200, 202, 204, and 206 (and other such blocks associated with the classification rules 108), the work item classifier 102 may classify the work items 104 to map the work items 104 to specific types of work items 104 based on the attributes 106 associated with the work items 104. For example, for the determination at block 200 as to whether a reference number for the work item includes a value, the work items 104 may be classified at 208 as a "Non-PO (purchase order) Invoice", with a scheduling weight of 50 being assigned, and the work items 104 may be classified at 210 as a "PO Invoice", with a scheduling weight of 50 being assigned.

Similarly, referring to Figures 1 and 2, for the determination at block 202 as to whether an amount associated with the work item is greater than a predetermined value (e.g., 20K), the work items 104 may be classified at 212 as a low value work item, with a scheduling weight of 20 being assigned, and the work items 104 may be classified at 214 as a high value work item, with a scheduling weight of 40 being assigned. In this manner, for the determination at block 204 and block 206, the work items 104 may be respectively classified at 216, 218, 220, and 222, with appropriate scheduling weights being assigned.

At block 224 of Figure 2, the classified work items 110 may be disposed, for example, in a table format for further processing. For example, as shown in Figure 10, the work items of the example of Figure 9 may be classified and disposed in a table format at 1000, with the columns representing "Local Non-PO", "Local Non-PO high value (HV)", "Local PO", "Local PO HV", and "Foreign Currency" corresponding to the classification rules associated with blocks 200, 202, 204, and 206 (also illustrated at 1002).

With respect to work item classification, the work items 104 may include additional determined (e.g., calculated) fields (e.g., processing date which may be based upon a payment due date). The classification rules 108 (such as the classification rules associated with blocks 200, 202, 204, and 206) may be configurable. Further, classifications may also be provided as part of the classification rules 108. For example, a classification rule that is used to classify a particular work item may be used as part of another classification rule.

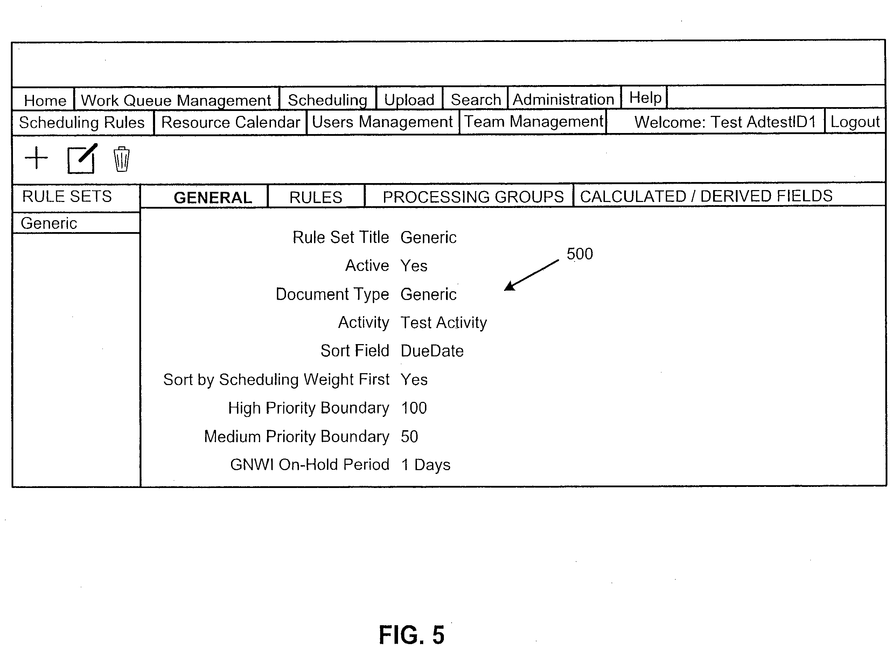

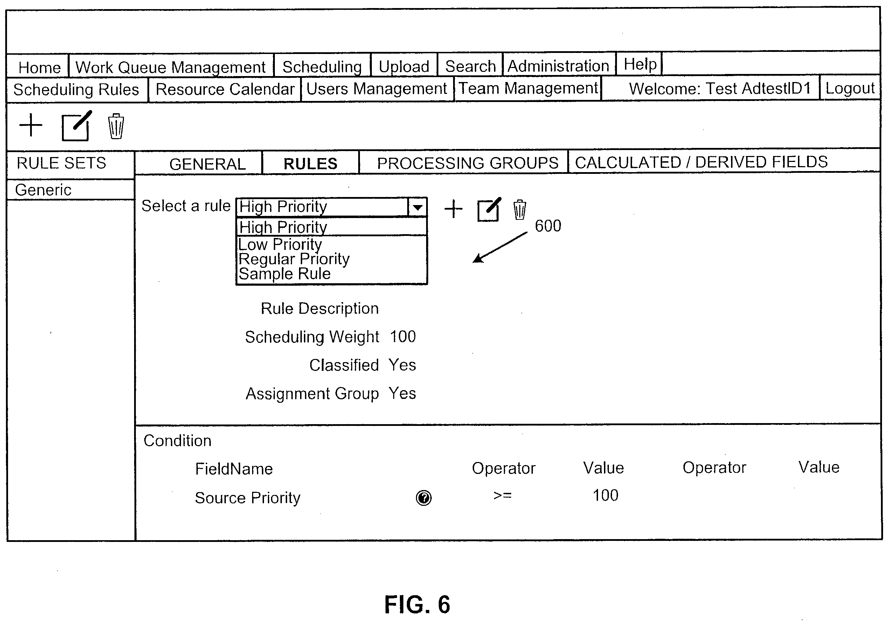

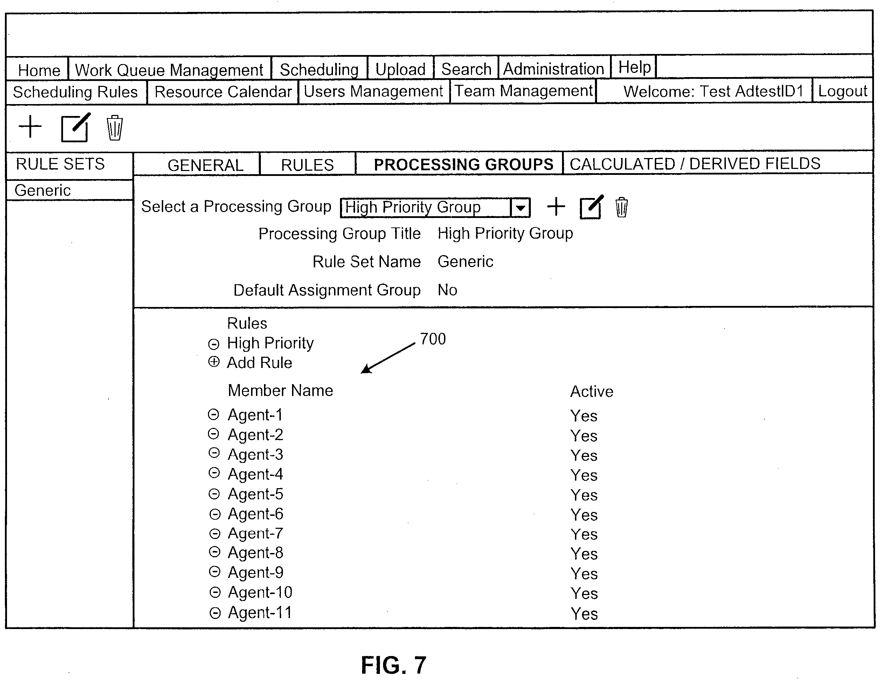

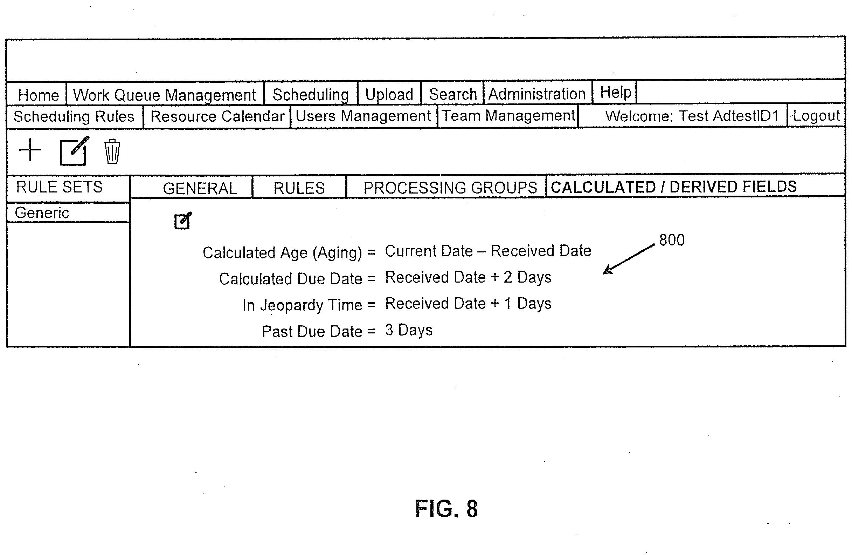

With respect to the classification rules 108, the prioritization rules 114, and the scheduling rules 120 as disclosed herein, Figure 5 illustrates a general user interface display of scheduling rules configuration, Figure 6 illustrates a rules user interface display of scheduling rules configuration, Figure 7 illustrates a processing groups user interface display of scheduling rules configuration, and Figure 8 illustrates a calculated/derived fields user interface display of scheduling rules configuration for the system 100, according to an example of the present disclosure. The user interface displays of Figures 5-8 may be provided, for example, as a display of the user interface 128.

Referring to Figure 5, with respect to the general user interface display of scheduling rules configuration, the general user interface display may identify the types of attributes of the rules (e.g., the classification rules 108, the prioritization rules 114, and/or the scheduling rules 120). For example, as illustrated at 500, the general user interface display of scheduling rules configuration may identify attributes such as the rule set title, whether a rule is active, a document type associated with the rule, an activity associated with the rule, a sort field, a type of sorting, a high priority boundary, a medium priority boundary, and an on-hold period.

Referring to Figure 6, with respect to the rules user interface display of scheduling rules configuration, the rules user interface display may identify the types of priorities of the rules (e.g., the classification rules 108, the prioritization rules 114, and/or the scheduling rules 120). For example, as illustrated at 600, the rules user interface display may identify the types of priorities of the rules as high priority, low priority, and regular priority, and associated rule descriptions such as scheduling weight, classification, and assignment group.

Referring to Figure 7, with respect to the processing groups user interface display of scheduling rules configuration, the processing groups user interface display may identify various attributes related to processing groups for a particular rule type (e.g., high priority, low priority, etc.) for the rules (e.g., the classification rules 108, the prioritization rules 114, and/or the scheduling rules 120). A processing group may represent a specific group of users (e.g., agents) who may process specific classification of the work items 104. The processing group may also be considered as a skilled group of the users. As illustrated at 700, the processing groups user interface display may identify the rule priority for a particular processing group, and the processing group resources (e.g., agents 1-11).

Referring to Figure 8, with respect to the calculated/derived fields user interface display of scheduling rules configuration, the calculated/derived fields user interface display may identify various calculated fields for the rules (e.g., the classification rules 108, the prioritization rules 114, and/or the scheduling rules 120). For example, as illustrated at 800, the calculated/derived fields user interface display may identify a calculated age, calculated due date, in jeopardy time, and past due date for the rules.

Figure 3 illustrates a flowchart of prioritization of the classified work items 110 for the system 100, according to an example of the present disclosure. Figure 11 illustrates work items prioritization for the system 100, according to an example of the present disclosure.

Referring to Figures 1, 3 and 11, for the example of the work item classification as disclosed herein with reference to Figures 2, 9, and 10, the example of Figures 3 and 11 may pertain to a series of invoices that are to be processed on a specific date by specific resources 126 to demonstrate intelligent scheduling and work item allocation for the system 100. The work item prioritizer 112 may prioritize (e.g., by ordering) the classified work items 110 using the prioritization rules 114 that sequence the classified work items 110 based upon the attributes they include and their classifications or "types" (as needed). As disclosed herein, the prioritization rules 114 may be configurable. Further, the prioritization rules 114 may include a plurality of levels (e.g., based on weights as disclosed herein). The prioritization rules 114 may use classifications for prioritization. Further, the prioritization rules 114 may be automatically (e.g., without human intervention) and/or manually specified.

Referring to Figures 1 and 3, in order to prioritize the classified work items 110, at block 300, the work item prioritizer 112 may apply a prioritization rule (e.g., of the prioritization rules 114) to determine whether allocation sorting is based on FIFO. In response to a determination that the allocation sorting is based on FIFO, at block 302, the classified work items 110 may be allocated first based on an earliest received date to generate the prioritized work items 116 at block 304.

In response to a determination that the allocation sorting is not based on FIFO, at block 306, the work item prioritizer 112 may apply a prioritization rule to determine whether allocation sorting is based on scheduling weight. In response to a determination that the allocation sorting is based on scheduling weight, at block 308, the classified work items 110 may be allocated first based on the highest sum of the work item's scheduling weight to generate the prioritized work items 116 at block 304.

In response to a determination that the allocation sorting is not based on scheduling weight, at block 310, the work item prioritizer 112 may apply a prioritization rule to determine whether allocation sorting is based on due date. In response to a determination that the allocation sorting is based on due date, at block 312, the classified work items 110 may be allocated first based on the nearest due date from the current date to generate the prioritized work items 116 at block 304.

In a similar manner, referring to blocks 314 and 316, other sorting options may be applied by the work item prioritizer 112 to generate the prioritized work items 116 at block 304.

Referring to Figures 1, 3, and 11, for the example of the work item classification as disclosed herein with reference to Figures 2, 9, and 10, the classified work items of Figure 10 may be prioritized as shown in Figure 11 at 1100 based on the prioritization rules 114 specified at 1102.

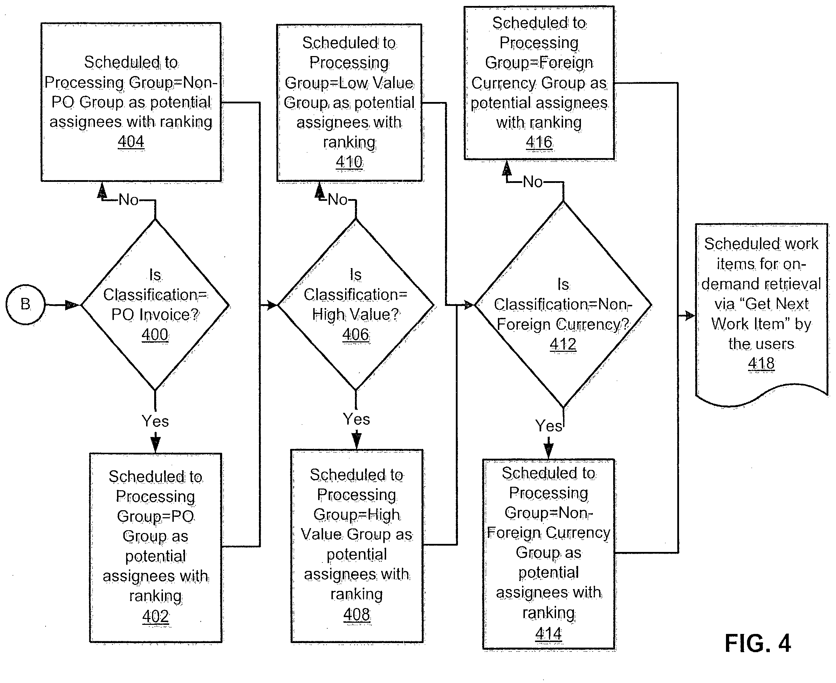

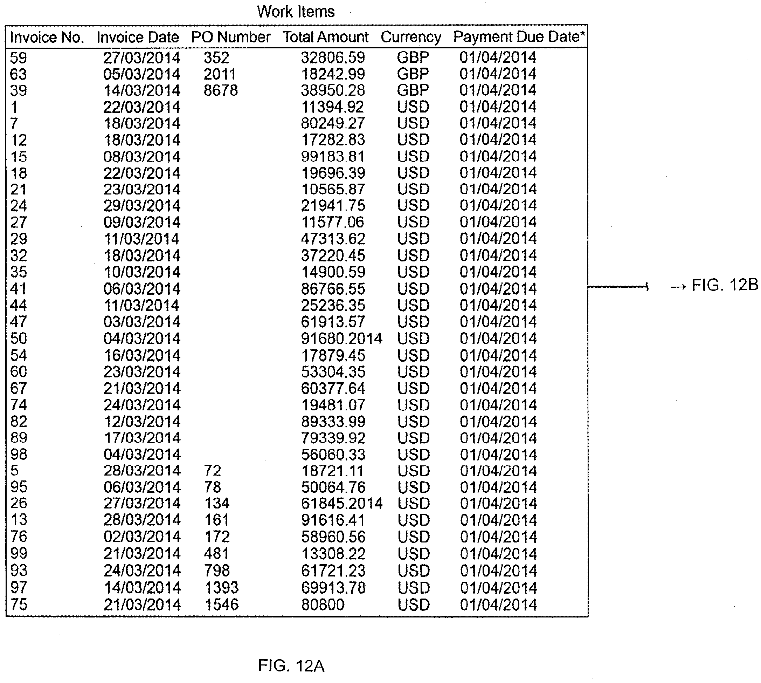

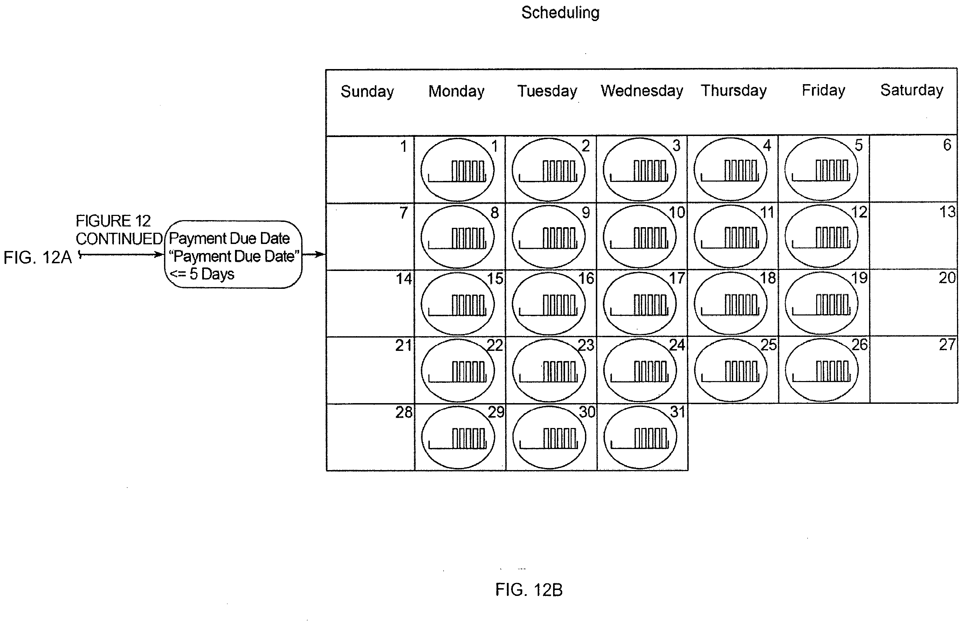

Figure 4 illustrates a flowchart of scheduling of the classified and prioritized work items for the system 100, according to an example of the present disclosure. Figures 12-23 illustrate scheduling, precedence determination, distribution determination, and allocation, with respect to the example of the work item classification and prioritization as disclosed herein with reference to Figures 2, 3, and 9-11. With respect to scheduling, the work item scheduler 118 may schedule the prioritized work items 116 using the scheduling rules 120 that determine the time (e.g., date) that a work item should (or may) be scheduled for processing based upon the attributes of the work item.

Referring to Figures 1 and 4, for the example of the work item classification and prioritization as disclosed herein with reference to Figures 2, 3, and 9-11, at block 400, the work item scheduler 118 may apply a scheduling rule (e.g., one of the scheduling rules 120) to determine whether classification is equal to a "PO Invoice" (e.g., blocks 200, 208, and 210). In response to a determination that the classification is equal to a "PO Invoice", at block 402, the work item scheduler 118 may schedule the prioritized work item 116 to a processing group that is equal to a "PO Group" as potential assignees with ranking. Potential assignees with ranking may be used to indicate scheduling of a work item to a resource (not directly allocated yet), and a ranking of the resource to process items under a specific processing group. Ranking may be based on resource membership on one or more processing groups. If a resource is a member of two processing groups, ranking may be based on a least number of members belonging to each group. For example, for a group-A including ten members and a group-B including five members, the resource ranking on these groups will be, group-A (rank 2) and group-B (rank 1), based, for example, on a least-skill analysis. A processing group may represent a specific group of users (e.g., agents) who may process a specific classification of work items. The processing group may also be considered as a skilled group of the users. Further, in response to a determination that the classification is not equal to a "PO Invoice", at block 404, the work item scheduler 118 may schedule the prioritized work item 116 to a processing group that is equal to a "Non-PO Group" as potential assignees with ranking.

Referring to Figures 1 and 4, at block 406, the work item scheduler 118 may apply a scheduling rule (e.g., one of the scheduling rules 120) to determine whether classification is equal to a high value (e.g., blocks 202, 212, and 214). In response to a determination that the classification is equal to a high value, at block 408, the work item scheduler 118 may schedule the work item from blocks 402 or 404 to a processing group that is equal to a high value group as potential assignees with ranking. Alternatively, in response to a determination that the classification is not equal to a high value, at block 410, the work item scheduler 118 may schedule the work item from blocks 402 or 404 to a processing group that is equal to a low value group as potential assignees with ranking.

Referring to Figures 1 and 4, at block 412, the work item scheduler 118 may apply a scheduling rule (e.g., one of the scheduling rules 120) to determine whether classification is equal to non-foreign currency (e.g., blocks 204, 216, and 218). In response to a determination that the classification is equal to a non-foreign currency, at block 414, the work item scheduler 118 may schedule the work item from blocks 408 or 410 to a processing group that is equal to a non-foreign currency as potential assignees with ranking. Alternatively, in response to a determination that the classification is not equal to a non-foreign currency, at block 416, the work item scheduler 118 may schedule the work item from blocks 408 or 410 to a processing group that is equal to a foreign currency group as potential assignees with ranking. With respect to scheduling related to blocks 206, 220, and 222, an additional scheduling weight (or weights) may be applied to the work item for prioritization. For example, if the due date of the work item is less than the current date, the scheduling weight will be increased significantly for the work item to be prioritized over the work items with a due date that is greater than the current date.

Referring to Figures 1 and 4, at block 418, the scheduled work items 122 may be placed, for example, in a queue or queues for on-demand retrieval via selection or actuation of a "Get Next Work Item" command by the resources 126 (e.g., by the agents A1-AN). With respect to the scheduling weight described herein with reference to Figure 2, the scheduling weight may be considered for sorting of work items when a resource will request a work item via "Get Next Work Item". In this case, work items with a highest scheduling weight will be retrieved first by the resource.

Referring to Figures 1, 4, and 12-23, for the example of the work item classification as disclosed herein with reference to Figures 2, 9, and 10 and the work item prioritization as disclosed herein with reference to Figures 3 and 11, the classified and prioritized work items of Figures 10 and 11 may be scheduled, analyzed for precedence, analyzed for distribution, and allocated, as illustrated with reference to Figures 12-23.

For example, with respect to scheduling, Figure 12 illustrates scheduling of work items for the system 100, according to an example of the present disclosure.

Referring to Figure 12, the work item scheduler 118 may generate the scheduled work items 122, for example, based on a payment due date of less than or equal to a predetermined time period (e.g., five days). With respect to work items with a payment due date of less than or equal to a predetermined time period, such work items may be prioritized and/or sorted during scheduling, and further, such work items may be allocated first to a resource that is requesting a work item for processing.

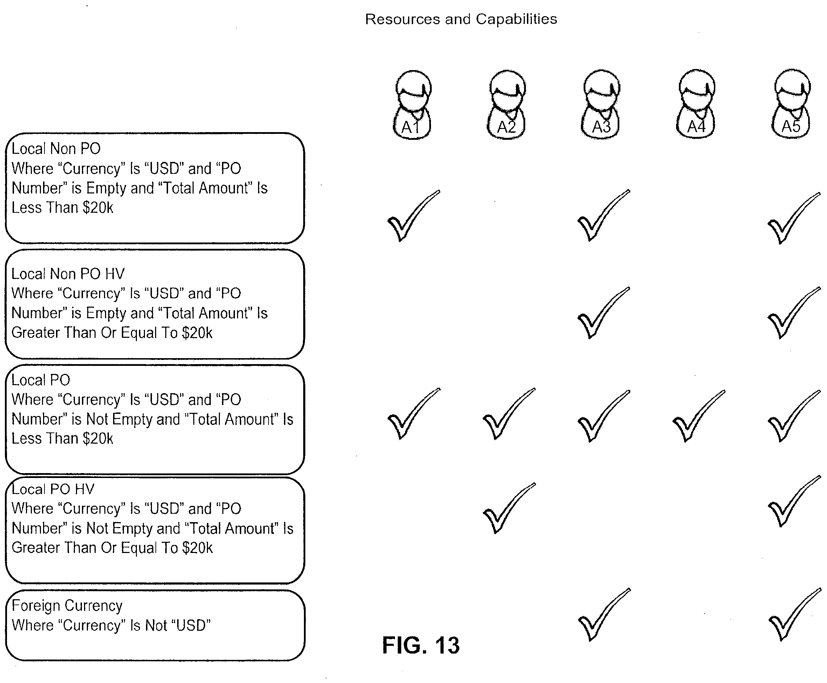

Figure 13 illustrates resources and capabilities determination for the system 100, according to an example of the present disclosure.

Referring to Figure 13, in order to schedule and allocate the prioritized work items 116 of Figure 11 (e.g., at 1100), the work item scheduler 118 and/or the work item allocator 124 (as needed) may identify the resources 126 and determine the capabilities of the resources 126. For example, the work item scheduler 118 and/or the work item allocator 124 may identify specific processing capabilities (e.g., based on agent badges), and map the capabilities to different work item classifications or "types". For example, agent A1 may include capabilities of performing work items related to "Local Non-PO" and "Local PO", agent A2 may include capabilities of performing work items related to "Local PO" and "Local PO HV", etc., for agents A3, A4, and A5.

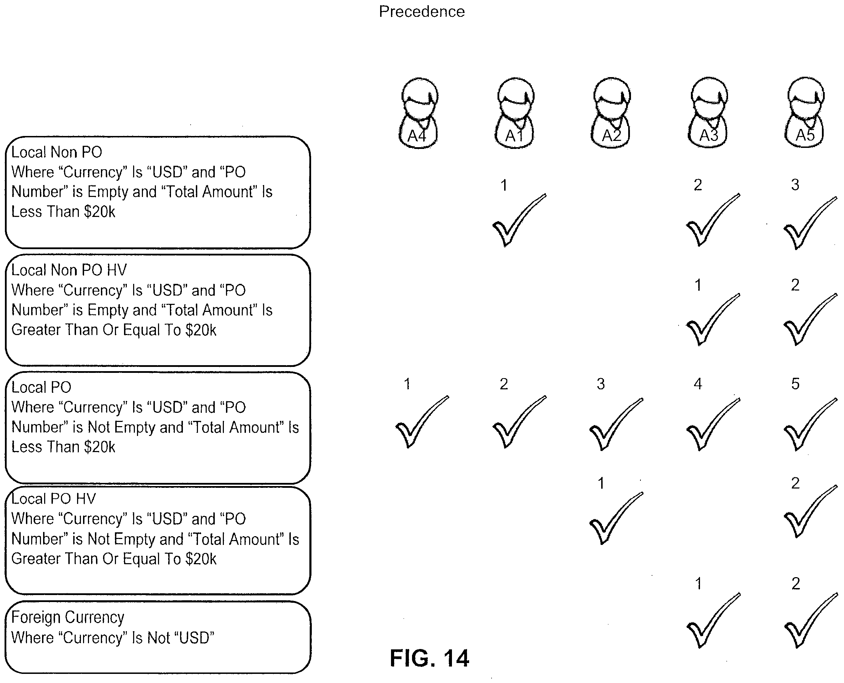

Figure 14 illustrates precedence determination for the system 100, according to an example of the present disclosure.

Referring to Figure 14, the work item scheduler 118 and/or the work item allocator 124 may determine and/or use precedence (e.g., the first precedence technique) for the resources 126 (e.g., the agents A1-A5), for example, by ranking the capabilities of the resources 126 by least qualified, and the work item classifications or "types". For example, as shown in Figure 14, agent A4 who is qualified to process "Local PO" work items may be designated as least qualified, agent A1 who is qualified to process "Local Non-PO" and "Local PO" work items may be designated as including higher qualifications compared to agent A4, etc., for agents A2, A3, and A5, where agent A5 is qualified to process all types of work items.

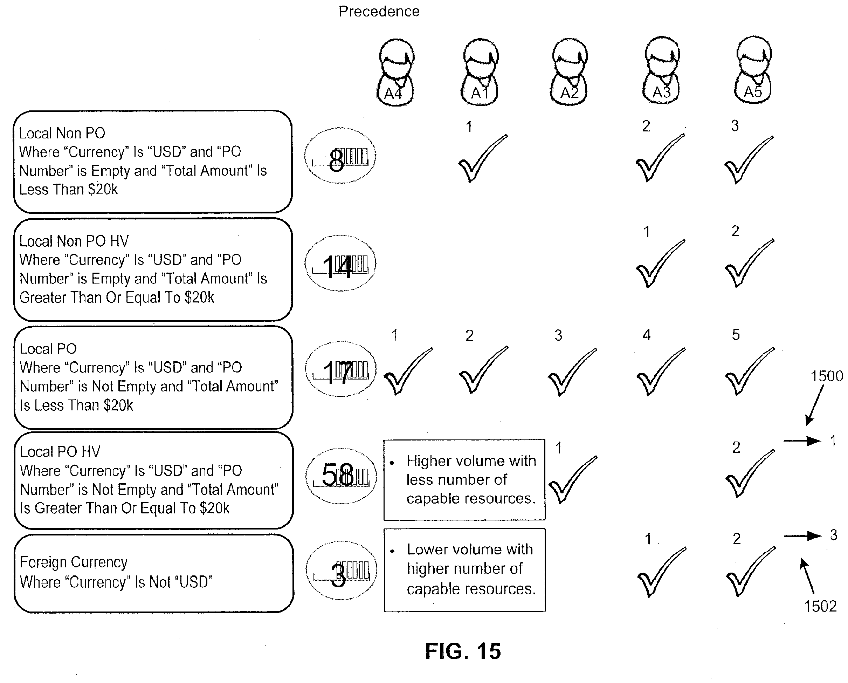

Figure 15 illustrates precedence determination for the system 100, according to an example of the present disclosure.

Referring to Figure 15, the work item scheduler 118 and/or the work item allocator 124 may determine and/or use further precedence (e.g., the second, more complex, precedence technique) for the resources 126 by taking into account the number of work items of a given classification or "type", and increasing (e.g., lowering the number) the ranking. For example, referring to Figures 9-15 (and particularly Figure 15), assuming that the "Local Non-PO" includes eight work items, "Local Non-PO HV" includes fourteen work items, "Local PO" includes seventeen work items, "Local PO HV" includes fifty-eight work items, and "Foreign Currency" includes three work items, the ranking of agent A5 with respect to "Local PO HV" may be increased (e.g., by lowering the number) as shown at 1500, and the ranking of agent A5 with respect to "Foreign Currency" may be decreased (e.g., by raising the number) as shown at 1502. For example, since the "Local PO HV" has the highest volume across all classifications with a lesser number of capable resources, the ranking of capable resources (e.g., agent A5) may be updated (i.e., increased) to be the highest (e.g., from two to one as shown at 1500) for the capable resources to always retrieve these work items until the volume is decreased. Similarly, with respect to "Foreign Currency", since "Foreign Currency" includes a lower volume with the same capable resource from "Local PO HV" (e.g., agent A5), the ranking for that specific resource on processing "Foreign Currency" may be updated (i.e., decreased) to become lower (e.g., from two to three as shown at 1502) compared to the ranking for "Local PO HV". Therefore, assuming agent A5 requests a work item, as shown in Figure 15, agent A5 may be eligible to receive a "Local Non-PO HV", a "Local PO HV", or a "Foreign Currency" classified work item. However, based on the ranking modification for agent A5, first, agent A5 may be allocated a "Local PO HV" classified work item.

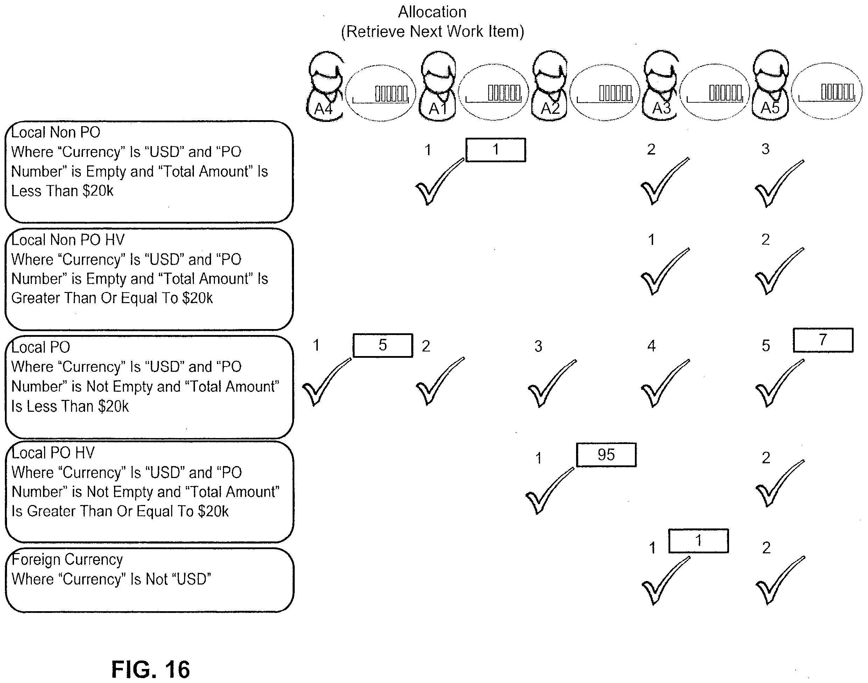

Figure 16 illustrates allocation of work items for the system 100, according to an example of the present disclosure.

Referring to Figure 16, the work item allocator 124 may allocate (e.g., provide for retrieval of the next work item in priority order) to a resource (e.g., an agent) based upon the resource's capability ranking (e.g., lowest number). In this regard, the resource's capability ranking may be analyzed with respect to the allocation rules 130 to generate the allocated work items 132. For example, referring to Figures 9-16 (and particularly Figures 11 and 16), the work item allocator 124 may allocate work item #5 to agent A4 (e.g., from the prioritized work items shown in Figure 11 at 1100), work item #1 to agent A1, work item #95 to agent A2, work item #1 to agent A3, and work item #7 to agent A5 based upon the capability ranking (e.g., lowest number) for the agents A1-A5. In this regard, allocation may be non-deterministic because it is unknown exactly when a resource (e.g., one of the agents) will select the "Get Next Work Item" option at the user interface 128. Accordingly, work item #1 may be allocated to agent A1 and agent A3 as shown in Figure 16, but received by either agent A1 or agent A3 depending on when (e.g., the first agent to select) one of these agents requests a work item by selecting the "Get Next Work Item" option of the user interface 128. Further, for the example of Figure 16, the allocation may be specified in a round-robin manner from left-to-right. With respect to selection, for example, of work items #5, #1, #95, #1, and #7 for allocation from the prioritized work items shown in Figure 11 at 1100, ranking may be based on a group membership of a resource, while prioritization may be applied with respect to work items. At the outset, a group (or groups) that a resource is member of may be identified, as well as the resource ranking for each group. When a resource requests for a work item to be processed, a "Get Next Work Item" command may be used to identify all of the work items belonging to the group (or groups) of the resource. The identified work items may be sorted based on the priority and/or scheduling weight. Thereafter, allocation of work items may be based on the highest ranking group and the highest scheduling weight under that specific group.

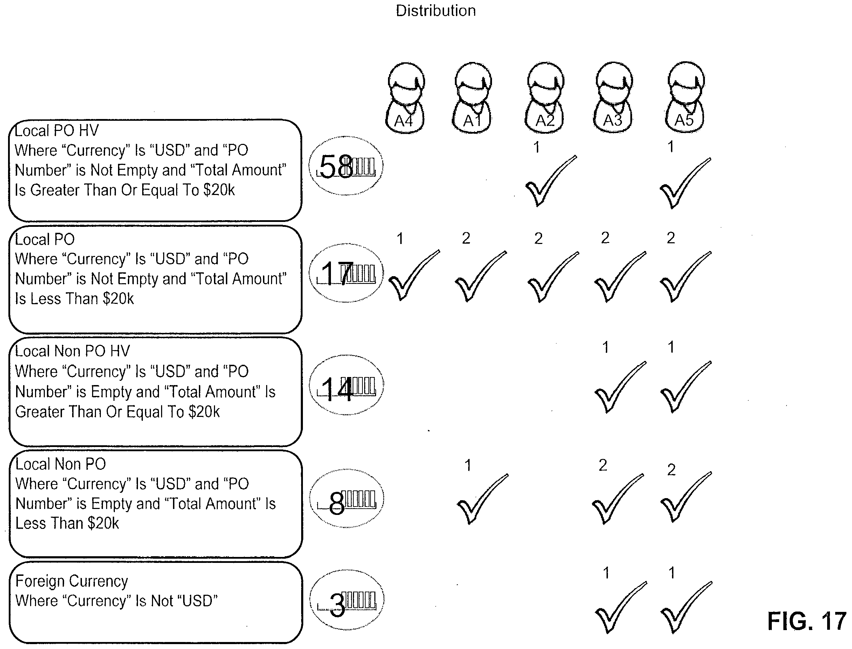

Figure 17 illustrates distribution of work items for the system 100, according to an example of the present disclosure.

Referring to Figure 17, the work item scheduler 118 and/or the work item allocator 124 may determine and/or use distribution of the work items, which determines possible work distribution queues based upon the ranking of work items for a given classification or "type", and the capabilities of the fixed resources 126 (e.g., the agents A1-A5). The distribution determination as disclosed herein may also account for the first and/or the second precedence techniques. The work item scheduler 118 and/or the work item allocator 124 may determine and/or use the optimal distribution of the work items based on the number of work items of a given type (e.g., descending as shown in Figure 17), and the least number of resources capable of processing the work items to determine the primary and secondary work item types that should be allocated to the resources 126 (e.g., the agents A1-A5). For example, for agent A4, "Local PO" work items may represent a primary work item type, for agent A1, "Local Non-PO" work items may represent a primary work item type, and "Local PO" work items may represent a secondary work item type, and so forth for agents A2, A3, and A5. For the work item scheduler 118 and/or the work item allocator 124, each resource may include one or more 1^{st} choice queues, and each queue may include one or more resources as 1^{st} choice. Distribution of the work items by the work item scheduler 118 and/or the work item allocator 124 may avoid scheduling and allocation issues when there are less qualified resources to process the work items. For example, as shown in Figure 17, one resource (e.g., agent A4) is capable of processing a "Local PO" invoice, and as such, "Local PO" invoices should be allocated to that resource (e.g., agent A4) as the primary resource, and not to another resource which would diminish the amount of work that resource (e.g., agent A4) has available.

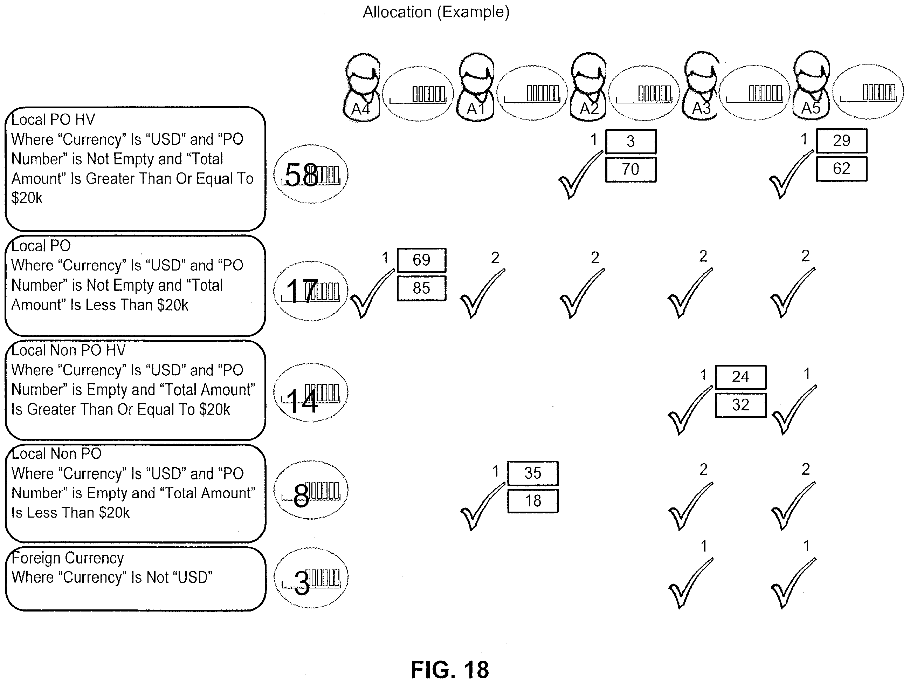

Figure 18 illustrates allocation of work items for the system 100, according to an example of the present disclosure.

Referring to Figure 18, the work item allocator 124 may use the previous distribution to allocate work items when a user selects a "Get Next Work Item" option (e.g., on the user interface 128). For example, the work item allocator 124 may use the previous distribution of Figure 17 to allocate work items when a user selects the "Get Next Work Item" option. In this regard, when agent A4 selects the "Get Next Work Item" option, the work item allocator 124 may use the previous distribution to allocate work item #69 (i.e., invoice #69 from the prioritized work items shown in Figure 11 at 1100 (note: not all invoice numbers are shown in Figure 11 for this example)) to the agent A4, and then work item #85 to the agent A4 when agent A4 again selects the "Get Next Work Item" option. Similarly, when agent A1 selects the "Get Next Work Item" option, the work item allocator 124 may use the previous distribution to allocate work item #35 to the agent A1, and then work item #18 to the agent A1, and so forth for agents A2, A3, and A5. With respect to Figure 18, the designations "Local PO HV" (1,1), "Local PO" (1,2,2,2,2), etc., may represent assignment priority, where the resources 126 may include one or more queue priorities. Assignment priority may be described as the ranking of agents of the resources 126 on each type of work items to determine a primary and secondary priority type. With respect to selection of work items #69/#85, #35/#18, #3/#70, #24/#32, and #29/#62 for allocation from the prioritized work items shown in Figure 11 at 1100, these work items may be selected for allocation based on the resource ranking (assignment priority) to the specific processing group. Under the specific processing group, the work items may be sorted by scheduling weight which is based, for example, on payment due date. For example, work item #69 (01/04/2014) and work item #85 (04/04/2014), work item #35 (03/04/2014) and work item #18 (05/04/2014), etc.

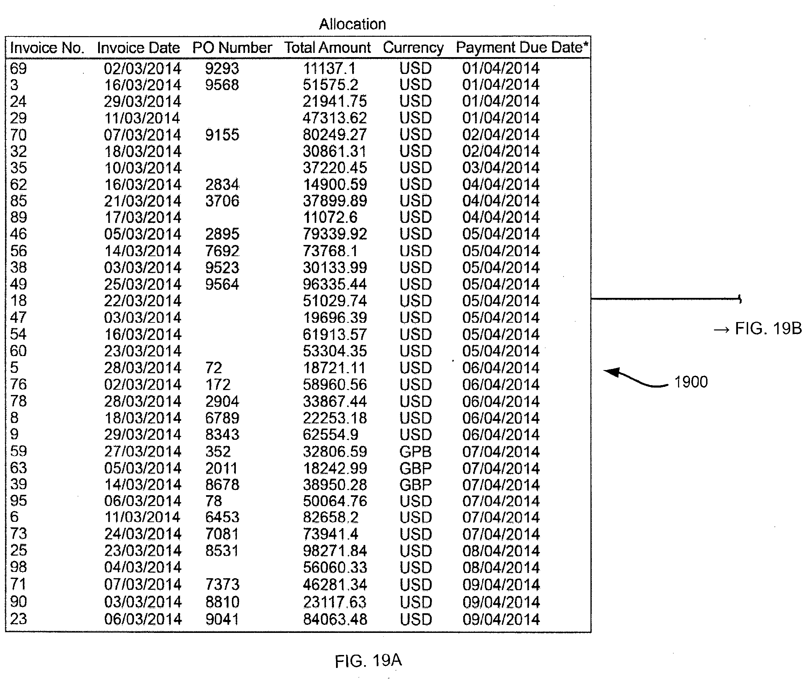

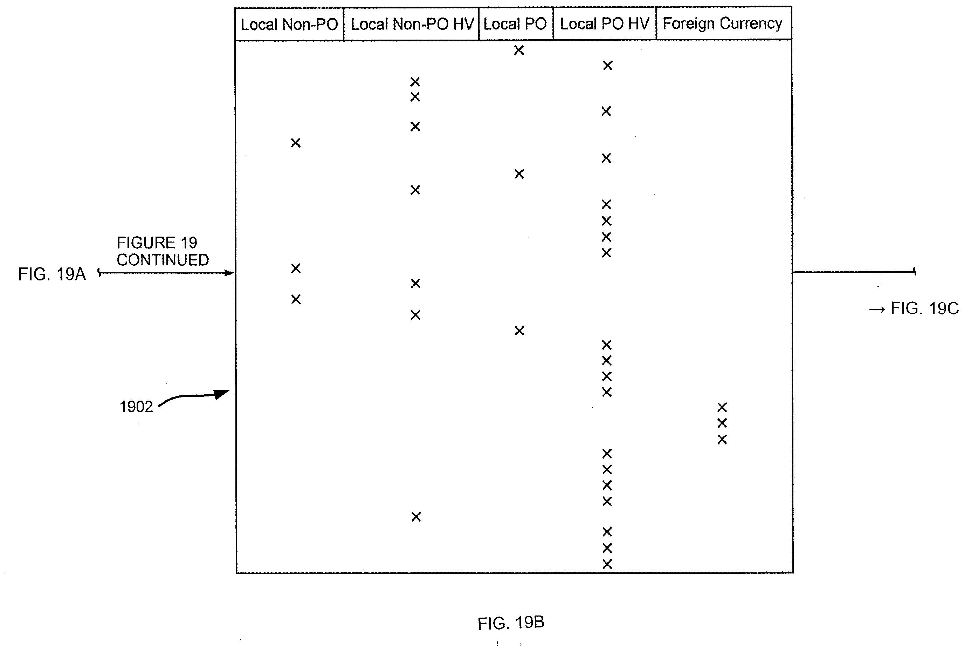

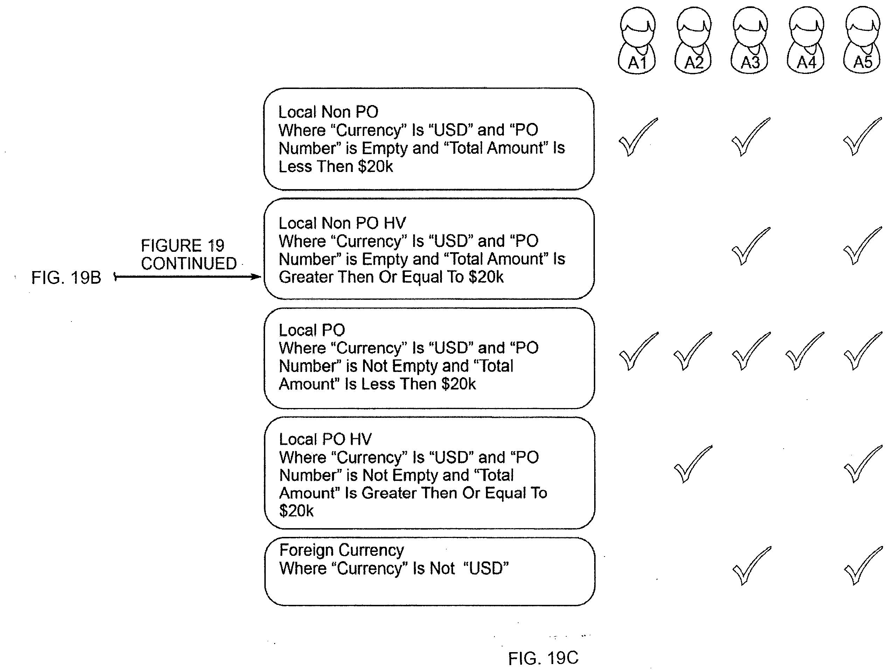

Figure 19 illustrates allocation of work items for the system 100, according to an example of the present disclosure.

Referring to Figure 19, the work item allocator 124 may perform allocation of the work items to the appropriate resources 126. For example, as shown in Figure 19, the tables at 1900 and 1902 provide the ordered work item reference data for the example of Figures 9-18.

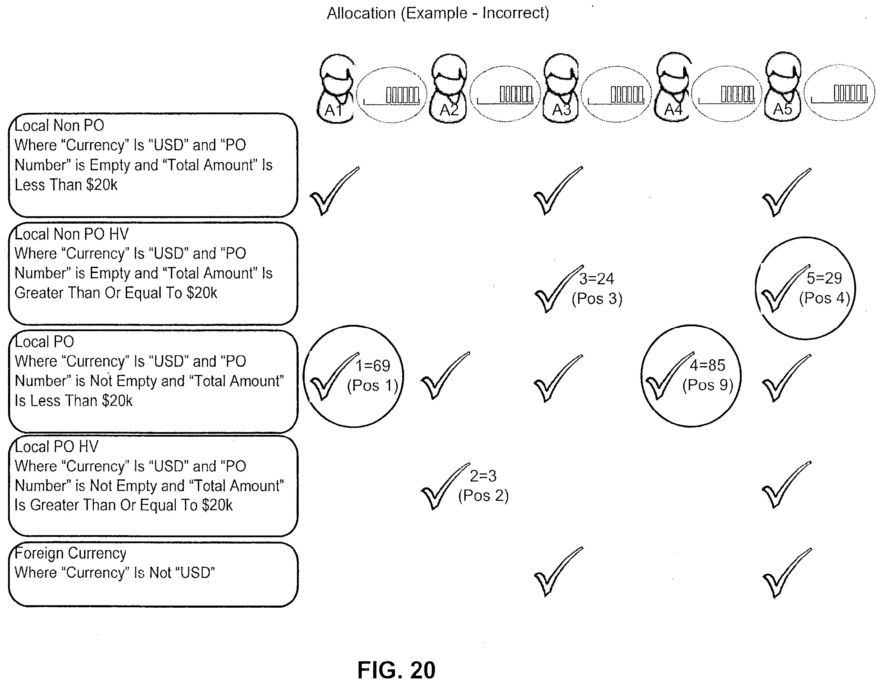

Figure 20 illustrates incorrect allocation of work items for the system 100, according to an example of the present disclosure.

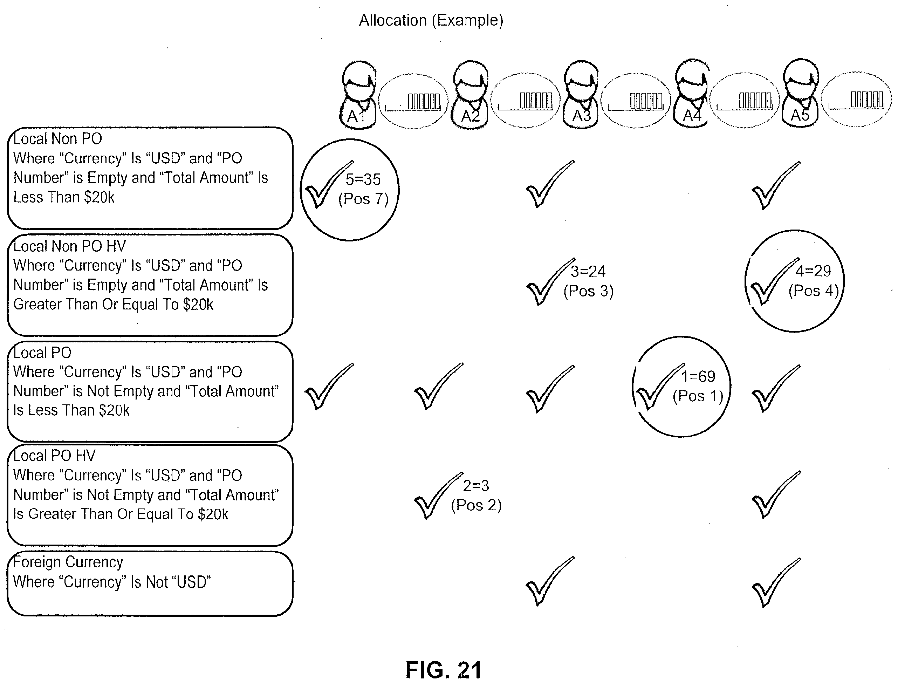

Referring to Figure 20, in order to illustrate correct allocation of the work items by the work item allocator 124 (see Figure 21), referring to Figure 20, allocation of work items may be based upon a match between the resource capabilities and work item classification when a resource selects the "Get Next Work Item" option. In this regard, absent a correct allocation, agent A1 may be incorrectly allocated work item #69 (with the row position being one), agent A4 may be incorrectly allocated work item #85 (with the row position being nine), and agent A5 may be incorrectly allocated work item #29 (with the row position being four). For the example of Figure 20, the designations 1=69, 2=3, 3=24, 4=85, and 5=29 may represent the sequence of 'Get Next Work Item'='Invoice number' from Figure 19. In this regard, the "Pos" may represent the row of the work item from the list of invoices from Figure 19. Further, as disclosed herein, an agent may use the "Get Next Work Item" functionality to retrieve the work items based on the skills and priorities of the agent requesting for the work item.

With respect to Figure 20, as disclosed herein, allocation may be non-deterministic because it is unknown exactly when a resource (e.g., one of the agents A1-A5) will select the "Get Next Work Item" option on the user interface 128. Further, for the example of Figure 20, the allocation may be performed in a "round-robin" manner from left-to-right.

Figure 21 illustrates allocation of work items for the system 100, according to an example of the present disclosure.

Referring to Figure 21, compared to Figure 20, with respect to correct allocation of the work items by the work item allocator 124, the work item allocator 124 may use the previous distribution (e.g., the distribution of Figure 19) for allocation of the work items when a user selects the "Get Next Work Item" option on the user interface 128. In this regard, for the correct allocation compared to Figure 20, agent A1 may be correctly allocated work item #35 (with the row position being seven), agent A4 may be correctly allocated work item #69 (with the row position being one), and agent A5 may be correctly allocated work item #29 (with the row position being four). For the example of Figure 21, the designations 5=35, 2=3, 3=24, 1=69, and 4=29 may represent the sequence of 'Get Next Work Item"='Invoice number' from Figure 19. In this regard, the "Pos" may represent the row of the work item from the list of invoices from Figure 19. Further, as disclosed herein, an agent may use the "Get Next Work Item" functionality to retrieve the work items based on the skills and priorities of the agent requesting for the work item. With respect to selection of the sequences 5=35, 2=3, 3=24, 1=69, and 4=29 for allocation, 5=35 means, '5' is the sequence when the resource selects a "Get Next Work Item" option, while '35' is the invoice number that the resource will be retrieving. In this scenario, A1 has the highest ranking on the "Local Non-PO" processing group which has the work items 35, 18, etc.

With respect to Figure 21, as disclosed herein, allocation may be non-deterministic because it is unknown exactly when a resource (e.g., one of the agents A1-A5) will select the "Get Next Work Item" option on the user interface 128. Further, for the example of Figure 21, the allocation may be performed in a "round-robin" manner from left-to-right.

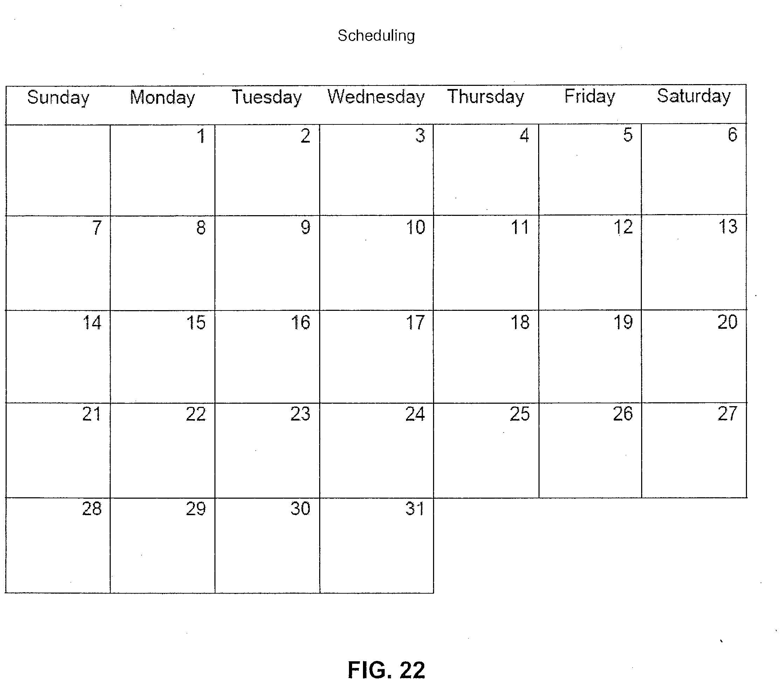

Figure 22 illustrates a calendar for scheduling of work items for the system 100, according to an example of the present disclosure.

Referring to Figure 22, the work item scheduler 118 may perform scheduling of the prioritized work items 116 to generate the scheduled work items 122, for example, in a calendar format. For example, the work item scheduler 118 may determine the date (and priority) for work items that are to be processed. In this regard, the work items 104 may be grouped in a calendar view.

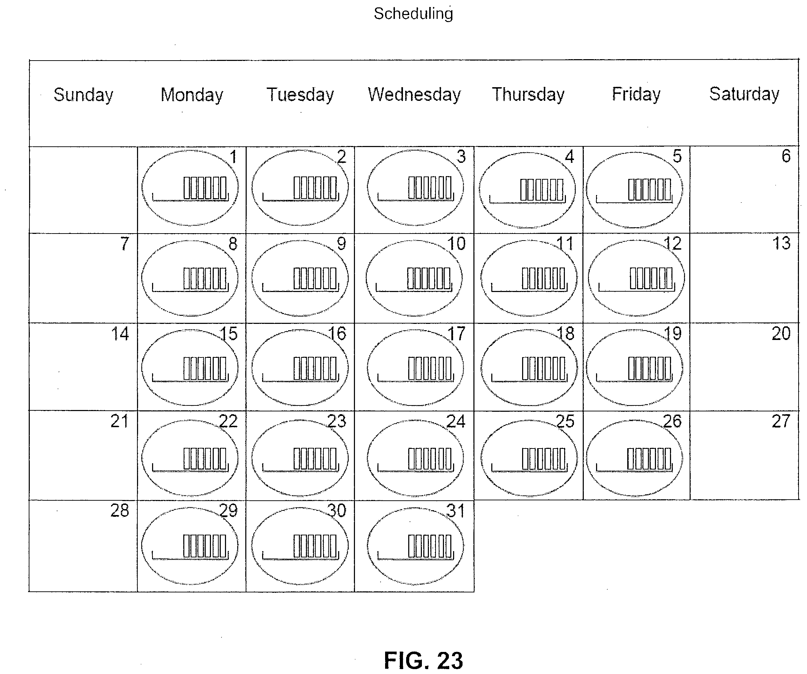

Figure 23 illustrates scheduling of work items for the system 100, according to an example of the present disclosure.

Referring to Figure 23, the work item scheduler 118 may generate a bar graph or another type of illustration of the scheduled work items 122. Alternatively, the work item scheduler 118 may generate various other types of graphs for illustration of the scheduled work items 122. In this regard, the work items 104 may be grouped based on when the work items may be processed and who (i.e., which agent) will perform the work item. The work item scheduler 118 may provide an indication of a number of work items that are to be performed, for example, on a given day, which of the number of work items are performed on a given day, and which resource is performing a particular work item.

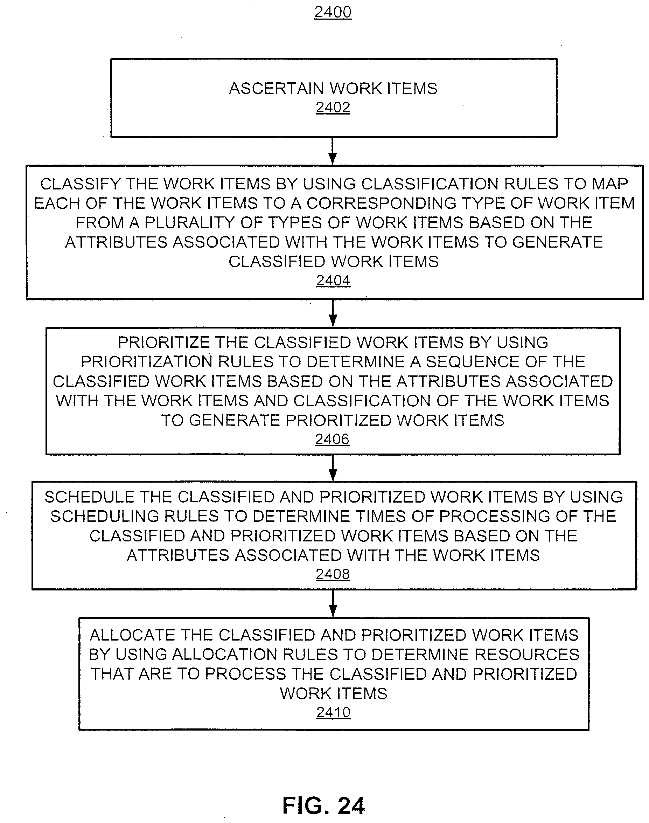

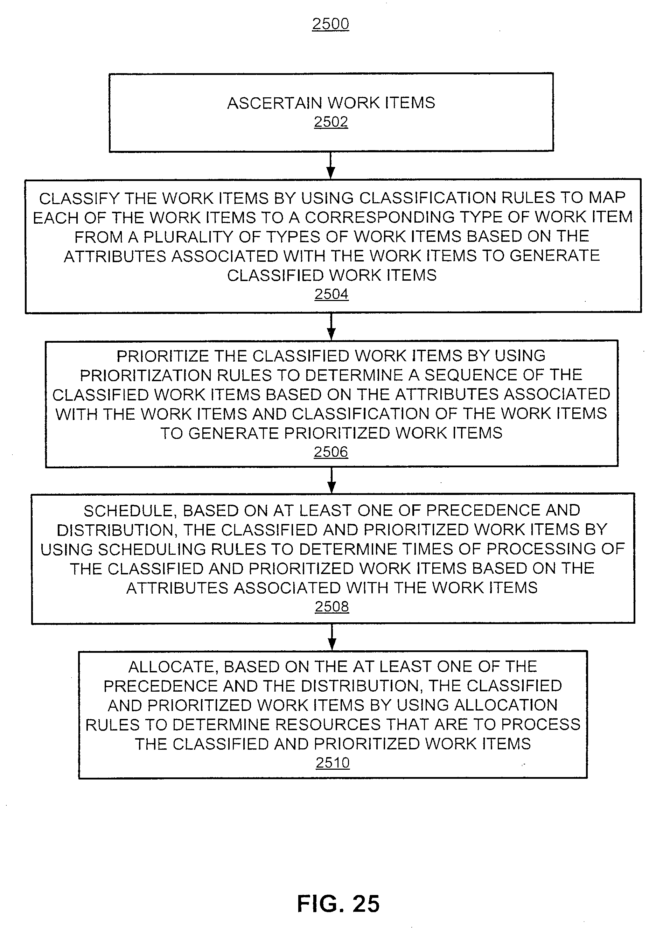

Figures 24 and 25 respectively illustrate flowcharts of methods 2400 and 2500 for intelligent scheduling and work item allocation, according to examples. The methods 2400 and 2500 may be implemented on the system 100 described above with reference to Figures 1-23 by way of example and not limitation. The methods 2400 and 2500 may be practiced in other systems.

Referring to Figures 1-24, and particularly Figure 24, at block 2402, the method 2400 may include ascertaining (e.g., by the work item classifier 102) work items 104. The work items 104 may include attributes 106.

At block 2404, the method 2400 may include classifying (e.g., by the work item classifier 102) the work items 104 by using classification rules 108 to map each of the work items 104 to a corresponding type of work item from a plurality of types of work items based on the attributes 106 associated with the work items 104 to generate classified work items 110.

At block 2406, the method 2400 may include prioritizing (e.g., by the work item prioritizer 112) the classified work items 110 by using prioritization rules 114 to determine a sequence of the classified work items 110 based on the attributes 106 associated with the work items 104 and classification of the work items 104 to generate prioritized work items 116.

At block 2408, the method 2400 may include scheduling (e.g., by the work item scheduler 118) the classified and prioritized work items by using scheduling rules 120 to determine times of processing of the classified and prioritized work items based on the attributes 106 associated with the work items 104.

At block 2410, the method 2400 may include allocating (e.g., by the work item allocator 124) the classified and prioritized work items by using allocation rules 130 to determine resources 126 that are to process the classified and prioritized work items.

According to examples, for the method 2400, the work item classifier 102 may classify the work items 104 by using classification rules 108 to map each of the work items 104 to the corresponding type of work item from the plurality of types of work items based on the attributes 106 associated with the work items 104 to generate classified work items 110 by assigning a weight to each of the classified work items 110 (e.g., see Figure 2), and generating the classified work items 110 by accounting for a total weight, based on the assigned weight to each of the classified work items 110, for each of the classified work items 110.

According to examples, for the method 2400, the prioritization rules 114 may include a weight-based prioritization rule (e.g., see Figure 3, blocks 306 and 308) to determine the sequence of the classified work items 110 based on the total weight assigned to the classified work items 110 to generate the prioritized work items 116.

According to examples, for the method 2400, the prioritization rules 114 include a first-in-first-out prioritization rule (e.g., see Figure 3, blocks 300 and 302) to determine the sequence of the classified work items 110 based on received times associated with the classified work items 110 to generate the prioritized work items 116.

According to examples, for the method 2400, the work item scheduler 118 may schedule the classified and prioritized work items by determining capabilities of the resources 126 that are to process the classified and prioritized work items (e.g., see Figure 13), determining precedence, based on ranking of the determined capabilities, for the resources 126 that are to process the classified and prioritized work items (e.g., see Figure 14), and scheduling, based on the determined precedence, the classified and prioritized work items by using scheduling rules 120 to determine the times of processing of the classified and prioritized work items based on the attributes 106 associated with the work items 104 (e.g., see Figures 4, 9, 22, and 23).

According to examples, for the method 2400, the work item scheduler 118 may schedule the classified and prioritized work items by determining capabilities of the resources 126 that are to process the classified and prioritized work items (e.g., see Figure 13), determining precedence, based on ranking of the determined capabilities from least capabilities to most capabilities, for the resources 126 that are to process the classified and prioritized work items (e.g., see Figure 14), and scheduling, based on the determined precedence, the classified and prioritized work items by using scheduling rules 120 to determine the times of processing of the classified and prioritized work items based on the attributes 106 associated with the work items 104 (e.g., see Figures 4, 9, 22, and 23).

According to examples, for the method 2400, the work item scheduler 118 may schedule the classified and prioritized work items by determining capabilities of the resources 126 that are to process the classified and prioritized work items (e.g., see Figure 13), determining precedence, based on ranking of the determined capabilities, for the resources 126 that are to process the classified and prioritized work items (e.g., see Figure 14), increasing or decreasing a ranking of a resource of the resources 126 based on a number of the classified and prioritized work items that are to be processed by the resource compared to other resources 126 (e.g., see Figure 15), and scheduling, based on the determined precedence and the increased or decreased ranking, the classified and prioritized work items by using scheduling rules 120 to determine the times of processing of the classified and prioritized work items based on the attributes 106 associated with the work items 104 (e.g., see Figures 4, 9, 22, and 23).

According to examples, for the method 2400, the work item allocator 124 may allocate the classified and prioritized work items by determining capabilities of the resources 126 that are to process the classified and prioritized work items (e.g., see Figure 13), determining precedence, based on ranking of the determined capabilities, for the resources 126 that are to process the classified and prioritized work items (e.g., see Figure 14), and allocating, based on the determined precedence, the classified and prioritized work items by using the allocation rules 130 to determine the resources 126 that are to process the classified and prioritized work items (e.g., see Figures 16, 18, 19, and 21).

According to examples, for the method 2400, the work item allocator 124 may allocate the classified and prioritized work items by determining capabilities of the resources 126 that are to process the classified and prioritized work items (e.g., see Figure 13), determining precedence, based on ranking of the determined capabilities, for the resources 126 that are to process the classified and prioritized work items (e.g., see Figure 14), increasing or decreasing a ranking of a resource of the resources 126 based on a number of the classified and prioritized work items that are to be processed by the resource compared to other resources 126 (e.g., see Figure 15), and allocating, based on the determined precedence and the increased or decreased ranking, the classified and prioritized work items by using the allocation rules 130 to determine the resources 126 that are to process the classified and prioritized work items (e.g., see Figures 16, 18, 19, and 21).

According to examples, for the method 2400, the work item scheduler 118 may schedule the classified and prioritized work items by determining capabilities of the resources 126 that are to process the classified and prioritized work items (e.g., see Figure 13), determining a distribution, based on the determined capabilities of the resources 126 that are to process the classified and prioritized work items and ranking of a number of the work items 104 for different types of the work items 104, to determine primary and secondary work item types that are to be allocated to the resources 126 that are to process the classified and prioritized work items (e.g., see Figure 17), and scheduling, based on the determined distribution, the classified and prioritized work items by using scheduling rules 120 to determine the times of processing of the classified and prioritized work items based on the attributes 106 associated with the work items 104 (e.g., see Figures 4, 9, 22, and 23).

According to examples, for the method 2400, the work item allocator 124 may allocate the classified and prioritized work items by determining capabilities of the resources 126 that are to process the classified and prioritized work items (e.g., see Figure 13), determining a distribution, based on the determined capabilities of the resources 126 that are to process the classified and prioritized work items and ranking of a number of the work items 104 for different types of the work items 104, to determine primary and secondary work item types that are to be allocated to the resources 126 that are to process the classified and prioritized work items (e.g., see Figure 17), and allocating, based on the determined distribution, the classified and prioritized work items by using the allocation rules 130 to determine the resources 126 that are to process the classified and prioritized work items (e.g., see Figures 16, 18, 19, and 21).

According to examples, for the method 2400, the work item scheduler 118 may schedule the classified and prioritized work items by determining capabilities of the resources 126 that are to process the classified and prioritized work items (e.g., see Figure 13), determining a distribution, based on the determined capabilities of a least number of the resources 126 that are to process the classified and prioritized work items and ranking of a number of the work items 104 for different types of the work items 104, to determine primary and secondary work item types that are to be allocated to the resources 126 that are to process the classified and prioritized work items (e.g., see Figure 17), and scheduling, based on the determined distribution, the classified and prioritized work items by using scheduling rules 120 to determine the times of processing of the classified and prioritized work items based on the attributes 106 associated with the work items 104 (e.g., see Figures 4, 9, 22, and 23).

According to examples, for the method 2400, the work item allocator 124 may allocate the classified and prioritized work items by receiving a request for retrieval of a next work item, analyzing the allocation of the classified and prioritized work items by using the allocation rules 130 to determine the resources 126 that are to process the classified and prioritized work items, and allocating, based on the analysis of the allocation of the classified and prioritized work items, the next work item after a previously allocated work item (e.g., see Figures 18 and 21).

According to examples, for the method 2400, the work item allocator 124 may allocate the classified and prioritized work items by using the allocation rules 130 to determine resources 126 that are to process the classified and prioritized work items by allocating, based on a round-robin process, the classified and prioritized work items by using the allocation rules 130 to determine resources 126 that are to process the classified and prioritized work items (e.g., see Figures 18 and 21).

Referring to Figures 1-23 and 25, and particularly Figure 25, at block 2502, the method 2500 may include ascertaining work items 104. The work items 104 may include attributes 106.

At block 2504, the method 2500 may include classifying the work items 104 by using classification rules 108 to map each of the work items 104 to a corresponding type of work item from a plurality of types of work items based on the attributes 106 associated with the work items 104 to generate classified work items 110.

At block 2506, the method 2500 may include prioritizing the classified work items 110 by using prioritization rules 114 to determine a sequence of the classified work items 110 based on the attributes 106 associated with the work items 104 and classification of the work items 104 to generate prioritized work items 116.

At block 2508, the method 2500 may include scheduling, based on precedence and/or distribution, the classified and prioritized work items by using scheduling rules 120 to determine times of processing of the classified and prioritized work items based on the attributes 106 associated with the work items 104.

At block 2510, the method 2500 may include allocating, based on the precedence and/or the distribution, the classified and prioritized work items by using allocation rules 130 to determine resources 126 that are to process the classified and prioritized work items.

According to examples, the method 2500 may include determining capabilities of the resources 126 that are to process the classified and prioritized work items, and determining the precedence based on ranking of the determined capabilities for the resources 126 that are to process the classified and prioritized work items (e.g., see Figures 13 and 14).

According to examples, the method 2500 may include increasing or decreasing a ranking of a resource of the resources 126 based on a number of the classified and prioritized work items that are to be processed by the resource compared to other resources 126 (e.g., see Figure 15).

According to examples, the method 2500 may include determining capabilities of the resources 126 that are to process the classified and prioritized work items (e.g., see Figure 13), and determining the distribution based on the determined capabilities of the resources 126 that are to process the classified and prioritized work items, and ranking of a number of the work items 104 for different types of the work items 104 to determine primary and secondary work item types that are to be allocated to the resources 126 that are to process the classified and prioritized work items (e.g., see Figure 17).

According to examples, a method for intelligent scheduling and work item allocation may include ascertaining work items 104, where the work items 104 may include attributes 106. The method for intelligent scheduling and work item allocation may include classifying the work items 104 by using classification rules 108 to map each of the work items 104 to a corresponding type of work item from a plurality of types of work items based on the attributes 106 associated with the work items 104 to generate classified work items 110 by assigning a weight to each of the classified work items 110, and generating the classified work items 110 by accounting for a total weight, based on the assigned weight to each of the classified work items 110, for each of the classified work items 110. The method for intelligent scheduling and work item allocation may include prioritizing the classified work items 110 by using prioritization rules 114 to determine a sequence of the classified work items 110 based on the attributes 106 associated with the work items 104 and classification of the work items 104 to generate prioritized work items 116, and scheduling the classified and prioritized work items by using scheduling rules 120 to determine times of processing of the classified and prioritized work items based on the attributes 106 associated with the work items 104, and/or allocating the classified and prioritized work items by using allocation rules 130 to determine resources 126 that are to process the classified and prioritized work items.

Figure 26 shows a computer system 2600 that may be used with the examples described herein. The computer system may represent a generic platform that includes components that may be in a server or another computer system. The computer system 2600 may be used as a platform for the system 100. The computer system 2600 may execute, by a processor (e.g., a single or multiple processors) or other hardware processing circuit, the methods, functions and other processes described herein. These methods, functions and other processes may be embodied as machine readable instructions stored on a computer readable medium, which may be non-transitory, such as hardware storage devices (e.g., RAM (random access memory), ROM (read only memory), EPROM (erasable, programmable ROM), EEPROM (electrically erasable, programmable ROM), hard drives, and flash memory).

The computer system 2600 may include a processor 2602 that may implement or execute machine readable instructions performing some or all of the methods, functions and other processes described herein. Commands and data from the processor 2602 may be communicated over a communication bus 2604. The computer system may also include a main memory 2606, such as a random access memory (RAM), where the machine readable instructions and data for the processor 2602 may reside during runtime, and a secondary data storage 2608, which may be non-volatile and stores machine readable instructions and data. The memory and data storage are examples of computer readable mediums. The memory 2606 may include an intelligent scheduler and work allocator 2620 including machine readable instructions residing in the memory 2606 during runtime and executed by the processor 2602. The intelligent scheduler and work allocator 2620 may include the elements of the intelligent scheduling and work item allocation system 100 shown with reference to Figures 1-25.

The computer system 2600 may include an I/O device 2610, such as a keyboard, a mouse, a display, etc. The computer system may include a network interface 2612 for connecting to a network. Other known electronic components may be added or substituted in the computer system.

What has been described and illustrated herein is an example along with some of its variations. The terms, descriptions and figures used herein are set forth by way of illustration only and are not meant as limitations. Many variations are possible within the spirit and scope of the subject matter, which is intended to be defined by the following claims -- and their equivalents -- in which all terms are meant in their broadest reasonable sense unless otherwise indicated.

## Claims

1. A intelligent scheduling and work item allocation system comprising:
a work item classifier, executed by at least one hardware processor, to
ascertain work items, wherein the work items include attributes, and
classify the work items by using classification rules to map each of the work items to a corresponding type of work item from a plurality of types of work items based on the attributes associated with the work items to generate classified work items;
a work item prioritizer, executed by the at least one hardware processor, to
prioritize the classified work items by using prioritization rules to determine a sequence of the classified work items based on the attributes associated with the work items and classification of the work items to generate prioritized work items;
a work item scheduler, executed by the at least one hardware processor, to
schedule the classified and prioritized work items by using scheduling rules to determine times of processing of the classified and prioritized work items based on the attributes associated with the work items; and
a work item allocator, executed by the at least one hardware processor, to
allocate the classified and prioritized work items by using allocation rules to determine resources that are to process the classified and prioritized work items.

2. The intelligent scheduling and work item allocation system according to claim 1, wherein the work item classifier is to classify the work items by using classification rules to map each of the work items to the corresponding type of work item from the plurality of types of work items based on the attributes associated with the work items to generate classified work items by
assigning a weight to each of the classified work items, and
generating the classified work items by accounting for a total weight, based on the assigned weight to each of the classified work items, for each of the classified work items.

3. The intelligent scheduling and work item allocation system according to claim 1 or 2, wherein the prioritization rules include a weight-based prioritization rule to determine the sequence of the classified work items based on the total weight assigned to the classified work items to generate the prioritized work items.

4. The intelligent scheduling and work item allocation system according to any one of the preceding claims, wherein the prioritization rules include a first-in-first-out prioritization rule to determine the sequence of the classified work items based on received times associated with the classified work items to generate the prioritized work items.

5. The intelligent scheduling and work item allocation system according to any one of the preceding claims, wherein the work item scheduler is to schedule the classified and prioritized work items by
determining capabilities of the resources that are to process the classified and prioritized work items,
determining precedence, based on ranking of the determined capabilities, for the resources that are to process the classified and prioritized work items, and
scheduling, based on the determined precedence, the classified and prioritized work items by using scheduling rules to determine the times of processing of the classified and prioritized work items based on the attributes associated with the work items;
and/or
wherein the work item scheduler is to schedule the classified and prioritized work items by
determining capabilities of the resources that are to process the classified and prioritized work items,
determining precedence, based on ranking of the determined capabilities from least capabilities to most capabilities, for the resources that are to process the classified and prioritized work items, and
scheduling, based on the determined precedence, the classified and prioritized work items by using scheduling rules to determine the times of processing of the classified and prioritized work items based on the attributes associated with the work items;
and/or
wherein the work item scheduler is to schedule the classified and prioritized work items by
determining capabilities of the resources that are to process the classified and prioritized work items,
determining precedence, based on ranking of the determined capabilities, for the resources that are to process the classified and prioritized work items,
increasing or decreasing a ranking of a resource of the resources based on a number of the classified and prioritized work items that are to be processed by the resource compared to other resources, and
scheduling, based on the determined precedence and the increased or decreased ranking, the classified and prioritized work items by using scheduling rules to determine the times of processing of the classified and prioritized work items based on the attributes associated with the work items.

6. The intelligent scheduling and work item allocation system according to any one of the preceding claims, wherein the work item allocator is to allocate the classified and prioritized work items by
determining capabilities of the resources that are to process the classified and prioritized work items,
determining precedence, based on ranking of the determined capabilities, for the resources that are to process the classified and prioritized work items, and
allocating, based on the determined precedence, the classified and prioritized work items by using the allocation rules to determine the resources that are to process the classified and prioritized work items;
and/or
wherein the work item allocator is to allocate the classified and prioritized work items by
determining capabilities of the resources that are to process the classified and prioritized work items,
determining precedence, based on ranking of the determined capabilities, for the resources that are to process the classified and prioritized work items,
increasing or decreasing a ranking of a resource of the resources based on a number of the classified and prioritized work items that are to be processed by the resource compared to other resources, and
allocating, based on the determined precedence and the increased or decreased ranking, the classified and prioritized work items by using the allocation rules to determine the resources that are to process the classified and prioritized work items.

7. The intelligent scheduling and work item allocation system according to any one of the preceding claims, wherein the work item scheduler is to schedule the classified and prioritized work items by
determining capabilities of the resources that are to process the classified and prioritized work items,
determining a distribution, based on the determined capabilities of the resources that are to process the classified and prioritized work items and ranking of a number of the work items for different types of the work items, to determine primary and secondary work item types that are to be allocated to the resources that are to process the classified and prioritized work items, and
scheduling, based on the determined distribution, the classified and prioritized work items by using scheduling rules to determine the times of processing of the classified and prioritized work items based on the attributes associated with the work items;
and/or
wherein the work item scheduler is to schedule the classified and prioritized work items by
determining capabilities of the resources that are to process the classified and prioritized work items,
determining a distribution, based on the determined capabilities of a least number of the resources that are to process the classified and prioritized work items and ranking of a number of the work items for different types of the work items, to determine primary and secondary work item types that are to be allocated to the resources that are to process the classified and prioritized work items, and
scheduling, based on the determined distribution, the classified and prioritized work items by using scheduling rules to determine the times of processing of the classified and prioritized work items based on the attributes associated with the work items.

8. The intelligent scheduling and work item allocation system according to any one of the preceding claims, wherein the work item allocator is to allocate the classified and prioritized work items by
determining capabilities of the resources that are to process the classified and prioritized work items,
determining a distribution, based on the determined capabilities of the resources that are to process the classified and prioritized work items and ranking of a number of the work items for different types of the work items, to determine primary and secondary work item types that are to be allocated to the resources that are to process the classified and prioritized work items, and
allocating, based on the determined distribution, the classified and prioritized work items by using the allocation rules to determine the resources that are to process the classified and prioritized work items.

9. The intelligent scheduling and work item allocation system according to any one of the preceding claims, wherein the work item allocator is to allocate the classified and prioritized work items by
receiving a request for retrieval of a next work item,
analyzing the allocation of the classified and prioritized work items by using the allocation rules to determine the resources that are to process the classified and prioritized work items, and
allocating, based on the analysis of the allocation of the classified and prioritized work items, the next work item after a previously allocated work item; and/or
wherein the work item allocator is to allocate the classified and prioritized work items by using the allocation rules to determine resources that are to process the classified and prioritized work items by
allocating, based on a round-robin process, the classified and prioritized work items by using the allocation rules to determine resources that are to process the classified and prioritized work items.

10. A method for intelligent scheduling and work item allocation, the method comprising:
ascertaining, by a hardware processor, work items, wherein the work items include attributes;
classifying the work items by using classification rules to map each of the work items to a corresponding type of work item from a plurality of types of work items based on the attributes associated with the work items to generate classified work items;
prioritizing the classified work items by using prioritization rules to determine a sequence of the classified work items based on the attributes associated with the work items and classification of the work items to generate prioritized work items;
scheduling, based on at least one of precedence and distribution, the classified and prioritized work items by using scheduling rules to determine times of processing of the classified and prioritized work items based on the attributes associated with the work items; and
allocating, based on the at least one of the precedence and the distribution, the classified and prioritized work items by using allocation rules to determine resources that are to process the classified and prioritized work items.

11. The method for intelligent scheduling and work item allocation according to claim 10, further comprising:
determining capabilities of the resources that are to process the classified and prioritized work items; and
determining the precedence based on ranking of the determined capabilities for the resources that are to process the classified and prioritized work items.

12. The method for intelligent scheduling and work item allocation according to claim 10 or 11, further comprising:
increasing or decreasing a ranking of a resource of the resources based on a number of the classified and prioritized work items that are to be processed by the resource compared to other resources.

13. The method for intelligent scheduling and work item allocation according to any one of claims 10 to 12, further comprising:
determining capabilities of the resources that are to process the classified and prioritized work items; and
determining the distribution based on
the determined capabilities of the resources that are to process the classified and prioritized work items, and
ranking of a number of the work items for different types of the work items to determine primary and secondary work item types that are to be allocated to the resources that are to process the classified and prioritized work items.

14. A non-transitory computer readable medium having stored thereon machine readable instructions for intelligent scheduling and work item allocation, the machine readable instructions when executed cause a computer system to:
ascertain work items, wherein the work items include attributes;
classify the work items by using classification rules to map each of the work items to a corresponding type of work item from a plurality of types of work items based on the attributes associated with the work items to generate classified work items by
assigning a weight to each of the classified work items, and
generating the classified work items by accounting for a total weight, based on the assigned weight to each of the classified work items, for each of the classified work items;
prioritize the classified work items by using prioritization rules to determine a sequence of the classified work items based on the attributes associated with the work items and classification of the work items to generate prioritized work items; and
at least one of
schedule the classified and prioritized work items by using scheduling rules to determine times of processing of the classified and prioritized work items based on the attributes associated with the work items, and
allocate the classified and prioritized work items by using allocation rules to determine resources that are to process the classified and prioritized work items.

15. The non-transitory computer readable medium according to claim 14, further comprising machine readable instructions that when executed further cause the computer system to:
allocate the classified and prioritized work items by
receiving a request for retrieval of a next work item,
analyzing the allocation of the classified and prioritized work items by using the allocation rules to determine the resources that are to process the classified and prioritized work items, and
allocating, based on the analysis of the allocation of the classified and prioritized work items, the next work item after a previously allocated work item.
